(19) **Europäisches Patentamt European Patent Office Office européen des brevets**

(11) **EP 4 734 421 A1**

(12) **EUROPEAN PATENT APPLICATION**
published in accordance with Art. 153(4) EPC

(43) Date of publication:
**29.04.2026 Bulletin 2026/18**

(21) Application number: **23941971.6**

(22) Date of filing: **21.06.2023**

(51) International Patent Classification (IPC):
**H04L 5/00** (2006.01)

(52) Cooperative Patent Classification (CPC):
**H04L 5/00**

(86) International application number:
**PCT/CN2023/101956**

(87) International publication number:
**WO 2024/259700 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHAO, Qun**
**Beijing 100085 (CN)**

(74) Representative: **Dehns Germany Partnerschaft mbB**
**Theresienstraße 6-8**
**80333 München (DE)**

(54) **SENSING REFERENCE SIGNAL SENDING METHOD, SENSING REFERENCE SIGNAL RECEIVING METHOD, SENSING TRANSMITTER, AND SENSING RECEIVER**

(57) The present disclosure relates to a sensing reference signal sending method, a sensing reference signal receiving method, a sensing transmitter, and a sensing receiver. The sensing transmitter determines a first position set and a second position set on the basis of parameters used for determining a subcarrier position, obtains a subcarrier position set on the basis of the first position set and the second position set, and then sends a sensing reference signal on the basis of the subcarrier position indicated by the subcarrier position set. The sensing receiver determines a first position set and a second position set on the basis of parameters used for determining a subcarrier position, obtains a subcarrier position set on the basis of the first position set and the second position set, and then receives a sensing reference signal on the basis of the subcarrier position indicated by the subcarrier position set.

FIG. 2A

| Determine a first position set and a second position set on the basis of parameters for determining a subcarrier position — S2101 |

| Obtain a subcarrier position set on the basis of the first position set and the second position set — S2102 |

| Send a sensing reference signal on the basis of the subcarrier position indicated by the subcarrier position set — S2103 |

**Description**

**TECHNICAL** FIELD

The present disclosure relates to the technical field of communications, and in particular, to a sensing reference signal sending and receiving method, a sensing transmitter, and a sensing receiver.

**BACKGROUND**

In wireless sensing, a distance, an azimuth angle, and a speed of a sensing target usually need to be estimated according to a sensing reference signal. The sensing transmitter needs to send a sensing reference signal, and the sensing receiver needs to receive the sensing reference signal.

**SUMMARY**

Embodiments of the present disclosure provide a sensing reference signal sending and receiving method, a sensing transmitter, and a sensing receiver.
According to a first aspect of the embodiments of the present disclosure, there is provided a method for sending a sensing reference signal, performed by a sensing transmitter in a sensing network, the method including:

determining a first position set and a second position set according to a parameter used for determining a subcarrier position, where the first position set and the second position set are used to indicate the subcarrier position;
obtaining a subcarrier position set according to the first position set and the second position set; and
sending a sensing reference signal according to a subcarrier position indicated by the subcarrier position set;
where the parameter for determining the subcarrier position includes:

a minimum frequency domain interval $K_{min}$ of a sensing reference signal resource element, where $K_{min}$ of is a positive integer; and
a first parameter N, where N is a positive integer greater than 1.

According to a second aspect of the embodiments of the present disclosure, there is provided a method for receiving a sensing reference signal performed by a sensing receiver in a sensing network, the method including:

determining a first position set and a second position set according to a parameter for determining a subcarrier position, where the first position set and the second position set are used to indicate the subcarrier position;
obtaining a subcarrier position set according to the first position set and the second position set; and
receiving a sensing reference signal according to a subcarrier position indicated by the subcarrier position set;
where the parameter for determining the subcarrier position includes:

a minimum frequency domain interval $K_{min}$ of a sensing reference signal resource element, where $K_{min}$ is a positive integer; and
a first parameter N, where N is a positive integer greater than 1.

According to a third aspect of the embodiments of the present disclosure, a sensing transmitter is provided, including:

a processing module, configured to determine a first position set and a second position set according to a parameter for determining a subcarrier position, and obtain a subcarrier position set according to the first position set and the second position set, where the first position set and the second position set are used to indicate the subcarrier position; and
a transceiver module, configured to send a sensing reference signal according to a subcarrier position indicated by the subcarrier position set;
where the parameter for determining the subcarrier position includes:

a minimum frequency domain interval $K_{min}$ of a sensing reference signal resource element, where $K_{min}$ of is a positive integer; and
a first parameter N, where N is a positive integer greater than 1.

According to a fourth aspect of the embodiments of the present disclosure, a sensing receiver is provided, including:

a processing module, configured to determine a first position set and a second position set according to a parameter for determining a subcarrier position, and obtain a subcarrier position set according to the first position set and the second position set, where the first position set and the second position set are used to indicate the subcarrier position; and

a receiver module, configured to receive a sensing reference signal according to a subcarrier position indicated by the subcarrier position set;

where the parameter for determining the subcarrier position includes:

a minimum frequency domain interval $K_{min}$ of a sensing reference signal resource element, where $K_{min}$ is a positive integer; and

a first parameter N, where N is a positive integer greater than 1.

According to a fifth aspect of the embodiments of the present disclosure, an electronic device is provided, including:

one or more processors;

where the electronic device is configured to perform the method for sending a sensing reference signal provided in the first aspect of the embodiments of the present disclosure.

According to a sixth aspect of the embodiments of the present disclosure, an electronic device is provided, including:

one or more processors;

where the electronic device is configured to perform the method for receiving a sensing reference signal provided in the second aspect of the embodiments of the present disclosure.

According to a seventh aspect of the embodiments of the present disclosure, a sensing network is provided, including:

a sensing transmitter, configured to perform the method for sending a sensing reference signal provided in the first aspect of the embodiments of the present disclosure; and

a sensing receiver, configured to perform the method for receiving a sensing reference signal provided in the second aspect of the embodiments of the present disclosure.

According to an eighth aspect of the embodiments of the present disclosure, a storage medium is provided, where the storage medium stores instructions, and when the instructions are run on an electronic device, the electronic device is enabled to perform the method for sending a sensing reference signal provided in the first aspect of the embodiments of the present disclosure, or perform the method for receiving a sensing reference signal provided in the second aspect of the embodiments of the present disclosure.

In the embodiments of the present disclosure, the final subcarrier position set is determined according to the first position set and the second position set, and the sensing reference signal is sent and received according to the final subcarrier position set.

## BRIEF DESCRIPTION OF THE DRAWINGS

In order to more clearly illustrate the technical solutions in the embodiments of the present disclosure, the drawings required for the description of the embodiments are introduced below, and the following drawings are only some embodiments of the present disclosure and do not specifically limit the protection scope of the present disclosure.

FIG. 1 is a schematic architectural diagram of a sensing network provided by an embodiment of the present disclosure.
FIG. 2A is a schematic flowchart of a method for sending a sensing reference signal provided by an embodiment of the present disclosure.
FIG. 2B is a schematic flowchart of a method for sending a sensing reference signal provided by an embodiment of the present disclosure.
FIG. 2C is a schematic flowchart of a method for sending a sensing reference signal provided by an embodiment of the present disclosure.

FIG. 3A is a schematic flowchart of a method for receiving a sensing reference signal provided by an embodiment of the present disclosure.

FIG. 3B is a schematic flowchart of a method for receiving a sensing reference signal provided by an embodiment of the present disclosure.

FIG. 3C is a schematic flowchart of a method for receiving a sensing reference signal provided by an embodiment of the present disclosure.

FIG. 4A is a schematic structural diagram of a sensing transmitter in a sensing network provided by an embodiment of the present disclosure.

FIG. 4B is a schematic structural diagram of a sensing receiver in a sensing network provided by an embodiment of the present disclosure.

FIG. 5 is a schematic structural diagram of an electronic device according to an embodiment of the present disclosure.

## DETAILED DESCRIPTION

Embodiments of the present disclosure provide a sensing reference signal sending and receiving method, a sensing transmitter, and a sensing receiver. In some embodiments, terms such as a method for sending a sensing reference signal and a method for receiving a sensing reference signal may be replaced with terms such as a subcarrier determining method and a sensing method.

The embodiments of the present disclosure are not exhaustive, are merely illustrative of some embodiments, and are not intended to specifically limit the protection scope of the present disclosure. In the case of no contradiction, each step in a certain embodiment can be implemented as an independent embodiment, and the steps can be arbitrarily combined, for example, the solution after removing part of the steps in a certain embodiment can also be implemented as an independent embodiment, and the order of the steps in a certain embodiment can be arbitrarily exchanged, in addition, the optional implementations in a certain embodiment can be arbitrarily combined; in addition, the embodiments can be arbitrarily combined, for example, part or all of the steps in different embodiments can be arbitrarily combined, and a certain embodiment can be arbitrarily combined with the optional implementations of other embodiments.

In the embodiments of the present disclosure, unless otherwise specified and there is a logical conflict, terms and/or descriptions in the embodiments are consistent and may be mutually referenced, and technical features in different embodiments may be combined according to an internal logical relationship thereof to form a new embodiment.

The terms used in the embodiments of the present disclosure are only for the purpose of describing specific embodiments, and are not intended to limit the present disclosure. The singular expressions "a", "an", "the", "the above", "said", "the foregoing", "this" and the like in the embodiments of the present disclosure also include plural expressions, unless clearly indicated to the contrary in the context. The predefinition in the embodiments of the present disclosure may be understood as definition, definition in advance, storage, pre-storage, pre-negotiation, pre-configuration, curing, pre-burning, or the like.

The prefix words such as "first" and "second" in the embodiments of the present disclosure are only used to distinguish different described objects, and do not limit the position, order, priority, number or content of the described objects. For example, if a described object is a "field", ordinal numbers before the "field" in "first field" and "second field" do not limit a position or a sequence of the "field", and the "first" and the "second" do not limit whether the "field" modified by the "first" and the "second" are in a same message, and do not limit a sequence of the "first field" and the "second field". For another example, if the described object is "level", ordinal numbers before "level" in "first level" and "second level" do not limit a priority between "levels". For another example, a quantity of the described object is not limited by the ordinal number, and may be one or more. Taking "first device" as an example, the quantity of the "device" may be one or more. In addition, objects modified by different prefix words may be the same or different, for example, if a described object is "device", "first device" and "second device" may be devices of the same type or devices of different types; for another example, if a described object is "information", "first information" and "second information" may be information of the same content or information of different content. In conclusion, in the embodiments of the present disclosure, the use of a prefix word or the like for distinguishing a described object does not constitute a limitation on the described object, and for the description of the described object, reference may be made to the description of the context in the claims or the embodiments, and the use of such a prefix word should not constitute a redundant limitation.

In the embodiments of the present disclosure, "a plurality of/multiple" means two or more. In the embodiments of the present disclosure, "and/or" is used to describe an association relationship of associated objects, representing three relationships that may exist independently, for example, A and/or B may represent: A exists alone, B exists alone, and both A and B exist. The description manners such as "at least one of A1, A2,..., and An" in the embodiments of the present disclosure include a case in which any one of A1, A2, ..., and An exists alone, and also include a case of any combination of any two or more of A1, A2, ..., and An, and each case may exist alone; for example, a description manner of "at least one of A, B, and C" includes cases of A alone, B alone, C alone, a combination of A and B, a combination of A and C, a combination of B and C, and a combination A and B and C.

In some embodiments, "A in one case, B in another case", "in response to a case A, in response to another case B" and the like may include the following technical solutions according to cases: A is performed independently of B, that is, A in some embodiments; B is performed independently of A, that is, B in some embodiments; A and B are selectively performed, that is, A and B are selected from A and B in some embodiments; and A and B are both performed, that is, A and B in some embodiments. When there are more branches such as A, B, and C, the situation is similar.

In some embodiments, terms such as "in response to ...", "in response to determining...", "in the case of...", "when...", "upon...", "if...", and "in case..." may be replaced with each other.

In some embodiments, "including A", "containing A", "indicating A", and "carrying A" may be interpreted as directly carrying A, or may be interpreted as indirectly indicating A.

In some embodiments, terms such as "greater than", "greater than or equal to", "above", "higher than", and "not less than" may be replaced with each other, and terms such as "less than", "less than or equal to", "below", "lower than", and "not greater than" may be replaced with each other.

In some embodiments, terms such as "radio", "wireless", "Radio Access Network (RAN)", "Access Network (AN)", and "RAN-based" may be replaced with each other.

In some embodiments, "predetermined" and "preset" may be interpreted as being pre-specified in a protocol, or may be interpreted as performing a preset action by an apparatus or the like.

In some embodiments, the apparatus and the like may be interpreted as physical or virtual, and names thereof are not limited to names described in the embodiments, and terms such as "apparatus", "equipment", "device", "network element", "node", "function", "unit", "entity", "system", "chip", "chip system", and "body" may be replaced with each other.

In some embodiments, names of information and the like are not limited to names described in the embodiments, and terms such as "information", "message", "signaling", "report", "configuration", "indication", "parameter", and "data" may be replaced with each other.

In some embodiments, terms such as "instruction" and "program" may be replaced with each other.

In some embodiments, "get", "acquire", "obtain", "receive", and "transmit (send and/or receive)" may be replaced with each other, and may be interpreted as a plurality of meanings such as receiving from another subject, obtaining from a protocol, obtaining by self-processing, and autonomous implementation.

In some embodiments, "send", "report", "deliver", and "transmit (send and/or receive)" may be replaced with each other.

In some embodiments, the acquisition of data, information, etc. may comply with laws and regulations of the country where the data is located.

In some embodiments, data, information, etc. may be obtained after user consent is obtained.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be replaced with each other.

In some embodiments, terms such as a base station, a network device, an access network device, and a gNB may be replaced with each other.

In the embodiments of the present disclosure, although the operations are described in a specific order in the drawings, it should not be understood as requiring these operations to be performed in the specific order shown or in a serial order, or requiring all the operations shown to be performed to obtain the desired results. In certain circumstances, multitasking and parallel processing may be advantageous. In addition, it is also advantageous to send multiple pieces of information through the same message.

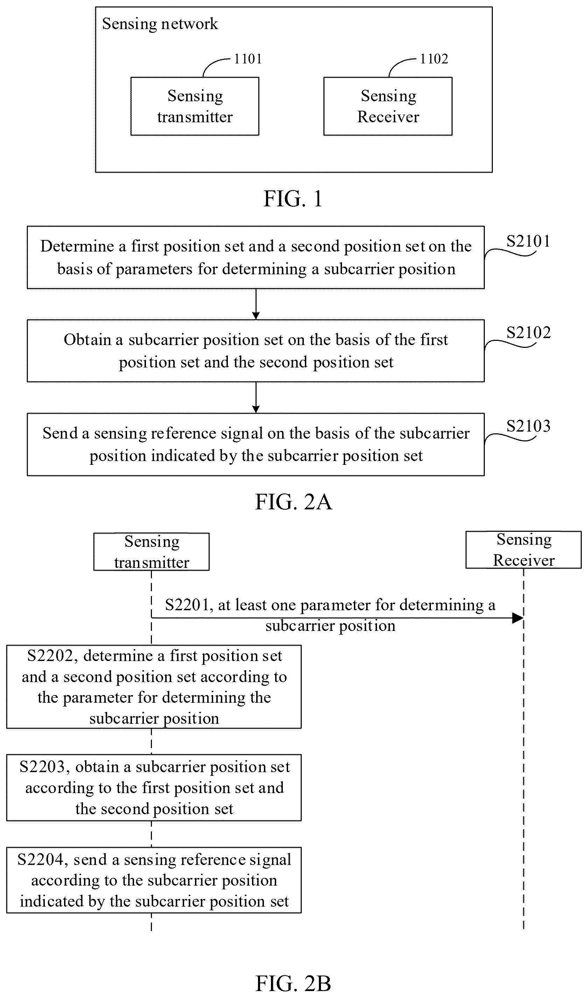

FIG. 1 is a schematic architectural diagram of a sensing network according to an embodiment of the present disclosure. As shown in FIG. 1, the sensing network includes a sensing transmitter 1101 and a sensing receiver 1102, where the sensing transmitter 1101 is configured to send a sensing reference signal, and the sensing receiver 1102 is configured to receive the sensing reference signal and measure the sensing reference signal. It should be noted that the number of the sensing transmitter 1101 and the number of the sensing receiver 1102 shown in FIG. 1 are only an example and do not constitute a limitation on the embodiments of the present disclosure. In an actual situation, there may be one or more sensing transmitters 1101, and there may be one or more sensing receivers 1102.

In some embodiments, the sensing transmitter 1101 and the sensing receiver 1102 may both be base stations.

In some embodiments, the sensing transmitter 1101 may be a base station, and the sensing receiver 1102 may be a terminal.

In some embodiments, the sensing transmitter 1101 may be a terminal, and the sensing receiver 1102 may be a base station.

In some embodiments, both the sensing transmitter 1101 and the sensing receiver 1102 may both be terminals.

In some embodiments, the base station may include an evolved NodeB (eNB), a next generation NodeB (gNB) in a new radio (NR) system, a base station in other future communication systems, or the like, but is not limited thereto.

In some embodiments, the terminal may include at least one of a mobile phone, a wearable device, an Internet of Things device, a vehicle having a communication function, a smart vehicle, a tablet computer (Pad), a computer having a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home.

In wireless sensing, a distance, an azimuth angle (such as a horizontal direction angle and a vertical direction angle), and a speed of a sensing target usually need to be estimated. To improve distance estimation precision, the wireless sensing network needs to have a relatively high time domain resolution, and the time domain resolution depends on bandwidth. In other words, a reference signal used for wireless sensing, that is, a sensing reference signal, needs to have a relatively large bandwidth.

In the related art, a sensing reference signal usually uses a uniform comb pattern in frequency domain. For example, as one of applications of sensing, positioning reference signals used for positioning are evenly distributed at equal intervals in frequency domain. In a given bandwidth, the comb pattern has disadvantages in terms of reference signal overhead, power limitation, and channel impulse response (CIR) ambiguity.

If a frequency domain interval of the sensing reference signal is set to be too small, that is, a frequency domain density is too high, overheads of the sensing reference signal are too large, a large quantity of valuable spectrum resources are wasted, and finally spectral efficiency is reduced; on the other hand, when total transmit power is fixed, if a frequency domain interval of the sensing reference signal is too small, power on each sensing reference signal resource element (RE), that is, an energy per resource element (EPRE), is too low, which inevitably reduces sensing precision and performance.

If the frequency domain interval of the sensing reference signal is set to be too large, that is, the frequency domain density is too low, undersampling may cause the sensing receiver to observe multiple images of the channel impulse response, resulting in timing ambiguity and sensing errors.

FIG. 2A is a flowchart illustrating a method for sending a sensing reference signal according to an embodiment of the present disclosure. As shown in FIG. 2A, an embodiment of the present disclosure relates to a method for sending a sensing reference signal. In some embodiments, the method for sending a sensing reference signal may be used for a sensing transmitter in a sensing network. The method for sending a sensing reference signal includes the following steps.

**In step S2101,** a first position set and a second position set are determined according to a parameter for determining a subcarrier position.

In some embodiments, the first position set and the second position set are used to indicate the subcarrier position.

In some embodiments, the first position set includes one or more elements, and each element is used to indicate a corresponding subcarrier position. Optionally, each element may be a number.

In some embodiments, the second position set includes one or more elements, and each element is used to indicate a corresponding subcarrier position. Optionally, each element may be a number.

**In step S2102,** a subcarrier position set is obtained according to the first position set and the second position set.

In some embodiments, a union of subcarrier positions in the first position set and the second position set may be taken to obtain the subcarrier position set.

**In step S2103,** a sensing reference signal is sent according to the subcarrier position indicated by the subcarrier position set.

According to the foregoing technical solution, the sensing transmitter in the sensing network may first determine, according to the parameter for determining the subcarrier position, the first position set and the second position set that are used to indicate the subcarrier position, obtain the final subcarrier position set according to the first position set and the second position set, and then send the sensing reference signal according to the subcarrier position indicated in the final subcarrier position set, thereby achieving sending of the sensing reference signal.

In some embodiments, the last subcarrier position in the first position set may be the same as the first subcarrier position in the second position set.

In some embodiments, all subcarrier positions in the first position set may be different from all subcarrier positions in the second position set.

In some embodiments, subcarrier positions indicated by the first position set are evenly distributed, subcarrier positions indicated by the second position set are evenly distributed, and a subcarrier frequency domain spacing in the first position set is different from a subcarrier frequency domain spacing in the second position set.

In some embodiments, the subcarrier positions indicated by the subcarrier position set are unevenly distributed.

According to the foregoing technical solution, the sensing transmitter first determines the first position set and the second position set whose subcarrier positions are evenly distributed, and subcarrier frequency domain spacings of the first position set and the second position set are different, so that a subcarrier position set whose subcarrier positions are unevenly distributed can be obtained, and the sensing transmitter sends the sensing reference signal according to the unevenly distributed subcarrier positions. Compared with the conventional uniform comb pattern, the sensing reference signal frequency domain pattern with non-uniform frequency domain provided by the subcarrier position set of the embodiment of the present disclosure can achieve a larger uniform degree of freedom in the Khatri-Rao subspace, and prevent the sensing receiver from observing multiple images of the channel impulse response.

In some embodiments, the subcarrier frequency domain spacing in the first position set is related to a minimum frequency domain spacing $K_{min}$ of the sensing reference signal resource element. $K_{min}$ is a positive integer.

In some embodiments, the subcarrier frequency domain spacing in the second position set is related to the minimum frequency domain spacing $K_{min}$ of the sensing reference signal resource element and the first parameter N. $K_{min}$ is a positive integer, and N is a positive integer greater than 1.

In some embodiments, the parameter for determining the subcarrier position includes:

a minimum frequency domain interval $K_{min}$ of a sensing reference signal resource element, $K_{min}$ being a positive integer;

a first parameter N, N being a positive integer greater than 1.

In some embodiments, the minimum frequency domain interval $K_{min}$ of the sensing reference signal resource element may be predefined by a protocol.

In some embodiments, $K_{min} \in \{2,4,6,12\}$.

Based on the foregoing parameter, the following describes some optional implementations of determining the first position set and the second position set according to the parameter for determining the subcarrier position in step S2101. For example, the first position set and the second position set may be determined according to any one of the following implementations 1.1, 1.2 and 1.3. The embodiments of the present disclosure do not exclude that the first position set and the second position set may also be determined in other implementations.

Implementation 1.1:

In this implementation, an integer from 0 to $\left\lfloor \dfrac{N}{2} \right\rfloor$ is taken for the variable n based on the formula $nK_{min}$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min}$, to obtain the second position set. $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

It may be understood that each digit in the first position set and the second position set indicates one subcarrier position in an orthogonal frequency division multiplexing (OFDM) system.

In this implementation, subcarrier positions indicated by the first position set are evenly distributed, a quantity of subcarrier positions is $\left\lfloor \dfrac{N}{2} \right\rfloor + 1$, and a subcarrier frequency domain spacing is $K_{min}$.

In this implementation, subcarrier positions indicated by the second position set are evenly distributed, a quantity of subcarrier positions is $\left\lceil \dfrac{N}{2} \right\rceil$, and a subcarrier frequency domain spacing is $\left( \left\lfloor \dfrac{N}{2} \right\rfloor + 1 \right) K_{min}$.

In this implementation, the first position set may be represented as:

$$S_1 = \left\{ nK_{min} \mid n = 0, \cdots, \left\lfloor \dfrac{N}{2} \right\rfloor \right\}.$$

In this implementation, the second position set may be represented as:

$$S_2 = \left\{ \left( n\left\lfloor \dfrac{N}{2} \right\rfloor + n - 1 \right) K_{min} \mid n = 1, \cdots, \left\lceil \dfrac{N}{2} \right\rceil \right\}.$$

Optionally, the subcarrier position set may be represented as:

$$S = \left\{ nK_{min} \mid n = 0, \cdots, \left\lfloor \frac{N}{2} \right\rfloor \right\} \cup \left\{ \left( n \left\lfloor \frac{N}{2} \right\rfloor + n - 1 \right) K_{min} \mid n = 1, \cdots, \left\lceil \frac{N}{2} \right\rceil \right\}.$$

For example, assuming that $K_{min} = 3$ and $N = 5$, then: $S_1 = \{0,3,6\}$, $S_2 = \{6,15,24\}$. Therefore, after the union of the first position set and the second position set is taken, the subcarrier position set is obtained as: S = $\{0,3,6,15,24\}$.

For another example, assuming that $K_{min} = 4$ and $N = 6$, then: $S_1 = \{0,4,8,12\}$, $S_2 = \{12,28,44\}$. Therefore, after the union of the first position set and the second position set is taken, the subcarrier position set is obtained as: S = $\{0,4,8,12,28,44\}$.

In this implementation, the last subcarrier position in the first position set is the same as the first subcarrier position in the second position set.

Implementation 1.2:

In this implementation, an integer from 0 to $\left\lfloor \frac{N}{2} \right\rfloor - 1$ is taken for the variable n based on the formula $nK_{min}$, to obtain the first position set; and an integer from 1 to $\left\lceil \frac{N}{2} \right\rceil$ is taken for the variable n based on the formula $\left( n \left\lfloor \frac{N}{2} \right\rfloor + n - 1 \right) K_{min}$, to obtain the second position set.

In this implementation, subcarrier positions indicated by the first position set are evenly distributed, a quantity of subcarrier positions is $\left\lfloor \frac{N}{2} \right\rfloor$, and a subcarrier frequency domain spacing is $K_{min}$.

In this implementation, subcarrier positions indicated by the second position set are evenly distributed, a quantity of subcarrier positions is $\left\lceil \frac{N}{2} \right\rceil$, and a subcarrier frequency domain spacing is $\left( \left\lfloor \frac{N}{2} \right\rfloor + 1 \right) K_{min}$.

In this implementation, the first position set may be represented as:

$$S_1 = \left\{ nK_{min} \mid n = 0, \cdots, \left\lfloor \frac{N}{2} \right\rfloor - 1 \right\}.$$

In this implementation, the second position set may be represented as:

$$S_2 = \left\{ \left( n \left\lfloor \frac{N}{2} \right\rfloor + n - 1 \right) K_{min} \mid n = 1, \cdots, \left\lceil \frac{N}{2} \right\rceil \right\}.$$

Optionally, the subcarrier position set may be represented as:

$$S = \left\{ nK_{min} \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} \mid n = 1, \cdots, \left\lceil \frac{N}{2} \right\rceil \right\}.$$

For example, assuming that $K_{min} = 4$ and N=6, then: $S_1 = \{0,4,8\}$, $S_2 = \{12,28,44\}$. Therefore, after the union of the first position set and the second position set is taken, the subcarrier position set is obtained as: S = $\{0,4,8,12,28,44\}$.

In this implementation, all subcarrier positions in the first position set are different from all subcarrier positions in the second position set.

Implementation 1.3:

In this implementation, an integer from 0 to $\left\lfloor \frac{N}{2} \right\rfloor$ is taken for the variable n based on the formula $nK_{min}$, to obtain

the first position set; and an integer from 1 to $\left\lceil \dfrac{N}{2} \right\rceil - 1$ is taken for the variable n based on the formula

$\left[ (n+1) \left\lfloor \dfrac{N}{2} \right\rfloor + n \right] K_{min}$ , to obtain the second position set.

In this implementation, subcarrier positions indicated by the first position set are evenly distributed, a quantity of subcarrier positions is $\left\lfloor \dfrac{N}{2} \right\rfloor + 1$ , and a subcarrier frequency domain spacing is $K_{min}$.

In this implementation, subcarrier positions indicated by the second position set are evenly distributed, a quantity of subcarrier positions is $\left\lceil \dfrac{N}{2} \right\rceil - 1$ , and a subcarrier frequency domain spacing is $\left( \left\lfloor \dfrac{N}{2} \right\rfloor + 1 \right) K_{min}$ .

In this implementation, the first position set may be represented as:

$$ S_1 = \left\{ nK_{min} \mid n = 0, \cdots, \left\lfloor \dfrac{N}{2} \right\rfloor \right\} . $$

In this implementation, the second position set may be represented as:

$$ S_2 = \left\{ \left[ (n+1) \left\lfloor \dfrac{N}{2} \right\rfloor + n \right] K_{min} \mid n = 1, \cdots, \left\lceil \dfrac{N}{2} \right\rceil - 1 \right\} . $$

Optionally, the subcarrier position set may be represented as:

$$ S = \left\{ nK_{min} \mid n = 0, \cdots, \left\lfloor \dfrac{N}{2} \right\rfloor \right\} \cup \left\{ \left[ (n+1) \left\lfloor \dfrac{N}{2} \right\rfloor + n \right] K_{min} \mid n = 1, \cdots, \left\lceil \dfrac{N}{2} \right\rceil - 1 \right\} . $$

For example, assuming that $K_{min} = 4$ and $N = 6$, then: $S_1 = \{0,4,8,12\}$, $S_2 = \{28,44\}$. Therefore, after the union of the first position set and the second position set is taken, the subcarrier position set is obtained as: $S = \{0,4,8,12,28,44\}$.

In this implementation, all subcarrier positions in the first position set are different from all subcarrier positions in the second position set.

According to the foregoing optional implementation 1.1, implementation 1.2, and implementation 1.3, the sensing reference signal frequency domain pattern with non-uniform frequency domain distribution provided by the subcarrier position set in the embodiment of the present disclosure can reduce the resource overhead and total transmit power of the sensing reference signal, and can achieve a relatively high time domain resolution and a relatively high sensing precision.

Specifically, in the case that the same time domain resolution (depending on the frequency domain bandwidth) and sensing accuracy are achieved, the embodiments of the present disclosure can greatly reduce the resource overhead and the total transmit power of the sensing reference signal.

Following the foregoing example, when the value of the minimum frequency domain interval $K_{min}$ is 4, the subcarrier position set is obtained as $S = \{0,4,8,12,28,44\}$. That is, the bandwidth of the sensing reference signal includes 45 subcarriers, and in the bandwidth of the 45 subcarriers, a total of 6 subcarriers are used to send the sensing reference signal. For the uniform comb pattern solution, it is assumed that the frequency domain spacing is also set to 4, and 12 subcarriers need to be used in the same bandwidth of 45 subcarriers. It can be seen that in the case of the same bandwidth, the embodiments of the present disclosure can use fewer subcarriers for sending the sensing reference signal, thereby reducing the resource overhead and the total transmit power of the sensing reference signal.

In the case of the same total transmit power, the embodiments of the present disclosure can enable the resource element (RE) where the sensing reference signal is located to have relatively high signal power (EPRE) and signal to interference plus noise ratio (SINR), thereby achieving more accurate sensing performance.

Still following the foregoing example, assuming that the total transmit power is 10 W, the total transmit power is allocated to 6 subcarriers, and power allocated to each subcarrier is 10/6 W. For a solution of a uniform comb pattern, the total transmit power is allocated to 12 subcarriers, and power allocated to each subcarrier is 10/12 W. It can be seen that in the case of the same total transmit power, the embodiments of the present disclosure can enable each sensing reference signal resource element (RE) to have a higher signal power (EPRE).

In the case of the same sensing reference signal resource overhead, the embodiments of the present disclosure can obtain a wider bandwidth, thereby achieving higher time domain resolution and more accurate sensing performance.

Still following the above example, the bandwidth of 45 subcarriers can be obtained by 6 subcarriers in the embodiment of the present disclosure, and for the solution of uniform comb pattern, 6 subcarriers can only obtain the bandwidth of 21 subcarriers. It can be seen that the embodiments of the present disclosure can obtain a wider bandwidth.

In addition, integrated sensing and communication (ISAC) can combine wireless communication and wireless sensing, so that some frequency domain resources can be used for both wireless sensing and wireless communication, and because the embodiments of the present disclosure can reduce subcarrier resources required for wireless sensing, more subcarrier resources can be used for wireless communication, which is advantageous for wireless communication.

In addition, in some embodiments, in step S2101, the first position set and the second position set may also be calculated according to the minimum frequency domain interval $K_{min}$ of the sensing reference signal resource element and a pair of co-prime positive integers. Compared with this embodiment, in the embodiment previously provided in the present disclosure, the first position set and the second position set can be calculated by sensing at least two parameters of the minimum frequency domain interval $K_{min}$ and the first parameter N of the reference signal resource element, and fewer parameters are required.

In some embodiments, the parameter for determining the subcarrier position includes:

a minimum frequency domain interval $K_{min}$ of the sensing reference signal resource element, $K_{min}$ being a positive integer;

a first parameter N, N being a positive integer greater than 1; and

an offset (Offset), Offset being a non-negative integer.

Based on the foregoing parameters, the following describes some optional implementations of determining the first position set and the second position set according to the parameter for determining the subcarrier position in step S2101. For example, the first position set and the second position set may be determined according to any one of the following implementations 2.1, 2.2 and 2.3, and the embodiments of the present disclosure do not exclude that the first position set and the second position set may also be determined in other implementations.

Implementation 2.1:

In this implementation, an integer from 0 to $\left\lfloor \dfrac{N}{2} \right\rfloor$ is taken for the variable n based on the formula $nK_{min} + Offset$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min} + Offset$, to obtain the second position set.

In this implementation, subcarrier positions indicated by the first position set are evenly distributed, a quantity of subcarrier positions is $\left\lfloor \dfrac{N}{2} \right\rfloor + 1$, and a subcarrier frequency domain spacing is $K_{min}$.

In this implementation, subcarrier positions indicated by the second position set are evenly distributed, a quantity of subcarrier positions is $\left\lceil \dfrac{N}{2} \right\rceil$, and a subcarrier frequency domain spacing is $\left( \left\lfloor \dfrac{N}{2} \right\rfloor + 1 \right) K_{min}$.

In this implementation, the first position set may be represented as:

$$S_1 = \left\{ nK_{min} + Offset \mid n = 0, \cdots, \left\lfloor \dfrac{N}{2} \right\rfloor \right\}.$$

In this implementation, the second position set may be represented as:

$$S_2 = \left\{ \left( n\left\lfloor \dfrac{N}{2} \right\rfloor + n - 1 \right) K_{min} + Offset \mid n = 1, \cdots, \left\lceil \dfrac{N}{2} \right\rceil \right\}.$$

Optionally, the subcarrier position set may be represented as:

$$S = \left\{ nK_{min} + Offset \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\}.$$

For example, assuming that $K_{min} = 4$, N = 6, and Offset = 1, then: $S_1 = \{1,5,9,13\}$, $S_2 = \{13,29,45\}$. Therefore, after the union of the first position set and the second position set is taken, the subcarrier position set is obtained as: S = {1,5,9,13,29,45}.

In this implementation, the last subcarrier position in the first position set is the same as the first subcarrier position in the second position set.

Implementation 2.2:

In this implementation, an integer from 0 to $\left\lfloor \frac{N}{2} \right\rfloor - 1$ is taken for the variable n based on the formula $nK_{min} + Offset$, to obtain the first position set; and an integer from 1 to $\left\lceil \frac{N}{2} \right\rceil$ is taken for the variable n based on the formula $\left( n \left\lfloor \frac{N}{2} \right\rfloor + n - 1 \right) K_{min} + Offset$, to obtain the second position set.

In this implementation, subcarrier positions indicated by the first position set are evenly distributed, a quantity of subcarrier positions is $\left\lfloor \frac{N}{2} \right\rfloor$, and a subcarrier frequency domain spacing is $K_{min}$.

In this implementation, subcarrier positions indicated by the second position set are evenly distributed, a quantity of subcarrier positions is $\left\lceil \frac{N}{2} \right\rceil$, and a subcarrier frequency domain spacing is $\left( \left\lfloor \frac{N}{2} \right\rfloor + 1 \right) K_{min}$.

In this implementation, the first position set may be represented as:

$$S_1 = \left\{ nK_{min} + Offset \mid n = 0, \cdots, \left\lfloor \frac{N}{2} \right\rfloor - 1 \right\}.$$

In this implementation, the second position set may be represented as:

$$S_2 = \left\{ \left( n \left\lfloor \frac{N}{2} \right\rfloor + n - 1 \right) K_{min} + Offset \mid n = 1, \cdots, \left\lceil \frac{N}{2} \right\rceil \right\}.$$

Optionally, the subcarrier position set may be represented as:

$$S = \left\{ nK_{min} + Offset \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\}.$$

For example, assuming that $K_{min} = 4$, N = 6, and Offset = 1, then: $S_1 = \{1,5,9\}$, $S_2 = \{13,29,45\}$. Therefore, after the union of the first position set and the second position set is taken, the subcarrier position set is obtained as: S = {1,5,9,13,29,45}.

In this implementation, all subcarrier positions in the first position set are different from all subcarrier positions in the second position set.

Implementation 2.3:

In this implementation, an integer from 0 to $\left\lfloor \frac{N}{2} \right\rfloor$ is taken for the variable n based on the formula $nK_{min} + Offset$,

to obtain the first position set; and an integer from 1 to $\left\lceil \dfrac{N}{2} \right\rceil - 1$ is taken for the variable n based on the formula

$\left[ (n+1)\left\lfloor \dfrac{N}{2} \right\rfloor + n \right] K_{min} + Offset$ , to obtain the second position set.

In this implementation, subcarrier positions indicated by the first position set are evenly distributed, a quantity of subcarrier positions is $\left\lfloor \dfrac{N}{2} \right\rfloor + 1$ , and a subcarrier frequency domain spacing is $K_{min}$.

In this implementation, subcarrier positions indicated by the second position set are evenly distributed, a quantity of subcarrier positions is $\left\lceil \dfrac{N}{2} \right\rceil - 1$ , and a subcarrier frequency domain spacing is $\left( \left\lfloor \dfrac{N}{2} \right\rfloor + 1 \right) K_{min}$ .

In this implementation, the first position set may be represented as:

$$S_1 = \left\{ nK_{min} + Offset \mid n = 0, \cdots, \left\lfloor \dfrac{N}{2} \right\rfloor \right\} .$$

In this implementation, the second position set may be represented as:

$$S_2 = \left\{ \left[ (n+1)\left\lfloor \dfrac{N}{2} \right\rfloor + n \right] K_{min} + Offset \mid n = 1, \cdots, \left\lceil \dfrac{N}{2} \right\rceil - 1 \right\} .$$

Optionally, the subcarrier position set may be represented as:

$$S = \left\{ nK_{min} + Offset \mid n = 0, \cdots, \left\lfloor \dfrac{N}{2} \right\rfloor \right\} \cup \left\{ \left[ (n+1)\left\lfloor \dfrac{N}{2} \right\rfloor + n \right] K_{min} + Offset \mid n = 1, \cdots, \left\lceil \dfrac{N}{2} \right\rceil - 1 \right\} .$$

For example, assuming that $K_{min} = 4$, $N = 6$, and Offset = 1, then: $S_1 = \{1,5,9,13\}$, $S_2 = \{29,45\}$. Therefore, after the union of the first position set and the second position set is taken, the subcarrier position set is obtained as: S = {1,5,9,13,29,45}.

In this implementation, all subcarrier positions in the first position set are different from all subcarrier positions in the second position set.

According to the foregoing optional implementation 2.1, implementation 2.2, and implementation 2.3, the sensing reference signal frequency domain pattern with non-uniform frequency domain distribution provided by the subcarrier position set in the embodiment of the present disclosure can reduce the resource overhead and total transmit power of the sensing reference signal, and can achieve a relatively high time domain resolution and a relatively high sensing precision. In addition, a subcarrier conflict between different sensing links or sensing networks can be avoided by the offset (*Offset*).

In some embodiments, the offset *(Offset)* may include at least one of the following:

a first offset k, k being a non-negative integer less than $K_{min}$;
a second offset $K_{offset}$, used to indicate an offset of a start physical resource block (PRB) of the sensing reference signal relative to a common resource block 0, $K_{offset}$ being a non-negative integer multiple of a quantity of subcarriers included in a physical resource block (PRB). For example, the quantity of subcarriers included in a physical resource block (PRB) is 12.

$$k \in \{0,1, \ldots, K_{min} - 1\}.$$

According to the foregoing embodiment, a subcarrier conflict between different sensing links or sensing networks can be avoided by using the first offset k.

According to the foregoing embodiment, all subcarrier positions of the sensing reference signal can be integrally offset relative to the common resource block 0 by using the second offset $K_{offset}$.

In some embodiments, the parameter for determining the subcarrier position includes:

a minimum frequency domain interval $K_{min}$ of a sensing reference signal resource element;
a first parameter N;
a first offset k.

In some embodiments, the parameter for determining the subcarrier position includes:

a minimum frequency domain interval $K_{min}$ of a sensing reference signal resource element;
a first parameter N;
a second offset $K_{offset}$.

In some embodiments, the parameter for determining the subcarrier position includes:

a minimum frequency domain interval $K_{min}$ of a sensing reference signal resource element;
a first parameter N;
a first offset k;
a second offset $K_{offset}$.

Based on the foregoing embodiments of the offset (*Offset*), the following describes some optional implementations of determining the first position set and the second position set according to the parameter for determining the subcarrier position in step S2101. For example, the first position set and the second position set may be determined according to any one of the following implementations 2.1.1, 2.1.2, 2.1.3, 2.2.1, 2.2.2, 2.2.3, 2.3.1, 2.3.2, and 2.3.3, and the embodiments of the present disclosure do not exclude that the first position set and the second position set may be determined by other implementations.

Optionally, for the implementation 2.1.1, the implementation 2.1.2, and the implementation 2.1.3, the related content of the foregoing implementation 2.1 may be referred to, for the implementation 2.2.1, the implementation 2.2.2, and the implementation 2.2.3, the related content of the foregoing implementation 2.2 may be referred to, and for the implementation 2.3.1, the implementation 2.3.2, and the implementation 2.3.3, the related content of the foregoing implementation 2.3 may be referred to.

Implementation 2.1.1:

In this implementation, an integer from 0 to $\left\lfloor \dfrac{N}{2} \right\rfloor$ is taken for the variable n based on the formula $nK_{min} + k$, to

obtain the first position set; and an integer from 1 to $\left\lceil \dfrac{N}{2} \right\rceil$ is taken for the variable n based on the formula

$\left( n \left\lfloor \dfrac{N}{2} \right\rfloor + n - 1 \right) K_{min} + k$ , to obtain the second position set.

In this implementation, the first position set may be represented as:

$$S_1 = \left\{ nK_{min} + k \mid n = 0, \cdots, \left\lfloor \frac{N}{2} \right\rfloor \right\}.$$

In this implementation, the second position set may be represented as:

$$S_2 = \left\{ \left( n \left\lfloor \frac{N}{2} \right\rfloor + n - 1 \right) K_{min} + k \mid n = 1, \cdots, \left\lceil \frac{N}{2} \right\rceil \right\}.$$

Optionally, the subcarrier position set may be represented as:

$$S = \left\{ nK_{min} + k \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + k \mid n = 1, \cdots, \left\lceil \frac{N}{2} \right\rceil \right\}.$$

Implementation 2.1.2:

In this implementation, an integer from 0 to $\left\lfloor \dfrac{N}{2} \right\rfloor$ is taken for the variable n based on the formula $nK_{min} + K_{offset}$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min} + K_{offset}$, to obtain the second position set.

In this implementation, the first position set may be represented as:

$$S_1 = \left\{ nK_{min} + K_{offset} \mid n = 0, \cdots, \left\lfloor \frac{N}{2} \right\rfloor \right\}.$$

In this implementation, the second position set may be represented as:

$$S_2 = \left\{ \left( n\left\lfloor \frac{N}{2} \right\rfloor + n - 1 \right) K_{min} + K_{offset} \mid n = 1, \cdots, \left\lceil \frac{N}{2} \right\rceil \right\}.$$

Optionally, the subcarrier position set may be represented as:

$$S = \left\{ nK_{min} + K_{offset} \mid n = 0, \cdots, \left\lfloor \frac{N}{2} \right\rfloor \right\} \cup \left\{ \left( n\left\lfloor \frac{N}{2} \right\rfloor + n - 1 \right) K_{min} + K_{offset} \mid n = 1, \cdots, \left\lceil \frac{N}{2} \right\rceil \right\}.$$

Implementation 2.1.3:

In this implementation, an integer from 0 to $\left\lfloor \dfrac{N}{2} \right\rfloor$ is taken for the variable n based on the formula $nK_{min} + k + K_{offset}$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min} + k + K_{offset}$, to obtain the second position set.

In this implementation, the first position set may be represented as:

$$S_1 = \left\{ nK_{min} + k + K_{offset} \mid n = 0, \cdots, \left\lfloor \frac{N}{2} \right\rfloor \right\}.$$

In this implementation, the second position set may be represented as:

$$S_2 = \left\{ \left( n\left\lfloor \frac{N}{2} \right\rfloor + n - 1 \right) K_{min} + k + K_{offset} \mid n = 1, \cdots, \left\lceil \frac{N}{2} \right\rceil \right\}.$$

Optionally, the subcarrier position set may be represented as:

$$S = \left\{ nK_{min} + k + K_{offset} \mid n = 0, \cdots, \left\lfloor \frac{N}{2} \right\rfloor \right\} \cup \left\{ \left( n\left\lfloor \frac{N}{2} \right\rfloor + n - 1 \right) K_{min} + k + K_{offset} \mid n = 1, \cdots, \left\lceil \frac{N}{2} \right\rceil \right\}.$$

Implementation 2.2.1:

In this implementation, an integer from 0 to $\left\lfloor \dfrac{N}{2} \right\rfloor - 1$ is taken for the variable n based on the formula $nK_{min} + k$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min} + k$, to obtain the second position set.

In this implementation, the first position set may be represented as:

$$S_1 = \left\{ nK_{min} + k \mid n = 0, \cdots, \left\lfloor \dfrac{N}{2} \right\rfloor - 1 \right\}.$$

In this implementation, the second position set may be represented as:

$$S_2 = \left\{ \left( n\left\lfloor \dfrac{N}{2} \right\rfloor + n - 1 \right) K_{min} + k \mid n = 1, \cdots, \left\lceil \dfrac{N}{2} \right\rceil \right\}.$$

Optionally, the subcarrier position set may be represented as:

$$S = \left\{ nK_{min} + k \mid n = 0, \cdots, \left\lfloor \dfrac{N}{2} \right\rfloor - 1 \right\} \cup \left\{ \left( n\left\lfloor \dfrac{N}{2} \right\rfloor + n - 1 \right) K_{min} + k \mid n = 1, \cdots, \left\lceil \dfrac{N}{2} \right\rceil \right\}.$$

Implementation 2.2.2:

In this implementation, an integer from 0 to $\left\lfloor \dfrac{N}{2} \right\rfloor - 1$ is taken for the variable n based on the formula $nK_{min} + K_{offset}$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min} + K_{offset}$, to obtain the second position set.

In this implementation, the first position set may be represented as:

$$S_1 = \left\{ nK_{min} + K_{offset} \mid n = 0, \cdots, \left\lfloor \dfrac{N}{2} \right\rfloor - 1 \right\}.$$

In this implementation, the second position set may be represented as:

$$S_2 = \left\{ \left( n\left\lfloor \dfrac{N}{2} \right\rfloor + n - 1 \right) K_{min} + K_{offset} \mid n = 1, \cdots, \left\lceil \dfrac{N}{2} \right\rceil \right\}.$$

Optionally, the subcarrier position set may be represented as:

$$S = \left\{ nK_{min} + K_{offset} \mid n = 0, \cdots, \left\lfloor \dfrac{N}{2} \right\rfloor - 1 \right\} \cup \left\{ \left( n\left\lfloor \dfrac{N}{2} \right\rfloor + n - 1 \right) K_{min} + K_{offset} \mid n = 1, \cdots, \left\lceil \dfrac{N}{2} \right\rceil \right\}.$$

Implementation 2.2.3:

In this implementation, an integer from 0 to $\left\lfloor \dfrac{N}{2} \right\rfloor - 1$ is taken for the variable n based on the formula $nK_{min} + k + K_{offset}$, to obtain the first position set; and an integer from 1 to $\left\lceil \dfrac{N}{2} \right\rceil$ is taken for the variable n based on the formula $\left( n\left\lfloor \dfrac{N}{2} \right\rfloor + n - 1 \right) K_{min} + k + K_{offset}$, to obtain the second position set.

In this implementation, the first position set may be represented as:

$$S_1 = \left\{ nK_{min} + k + K_{offset} \mid n = 0, \cdots, \left\lfloor \frac{N}{2} \right\rfloor - 1 \right\}.$$

In this implementation, the second position set may be represented as:

$$S_2 = \left\{ \left( n\left\lfloor \frac{N}{2} \right\rfloor + n - 1 \right) K_{min} + k + K_{offset} \mid n = 1, \cdots, \left\lceil \frac{N}{2} \right\rceil \right\}.$$

Optionally, the subcarrier position set may be represented as:

$$S = \left\{ nK_{min} + k + K_{offset} \mid n = 0, \cdots, \left\lfloor \frac{N}{2} \right\rfloor - 1 \right\} \cup \left\{ \left( n\left\lfloor \frac{N}{2} \right\rfloor + n - 1 \right) K_{min} + k + K_{offset} \mid n = 1, \cdots, \left\lceil \frac{N}{2} \right\rceil \right\}.$$

Implementation 2.3.1:

In this implementation, an integer from 0 to $\left\lfloor \dfrac{N}{2} \right\rfloor$ is taken for the variable n based on the formula $nK_{min} + k$, to obtain the first position set; and an integer from 1 to $\left\lceil \dfrac{N}{2} \right\rceil - 1$ is taken for the variable n based on the formula $\left[ (n+1)\left\lfloor \dfrac{N}{2} \right\rfloor + n \right] K_{min} + k$, to obtain the second position set.

In this implementation, the first position set may be represented as:

$$S_1 = \left\{ nK_{min} + k \mid n = 0, \cdots, \left\lfloor \frac{N}{2} \right\rfloor \right\}.$$

In this implementation, the second position set may be represented as:

$$S_2 = \left\{ \left[ (n+1)\left\lfloor \frac{N}{2} \right\rfloor + n \right] K_{min} + k \mid n = 1, \cdots, \left\lceil \frac{N}{2} \right\rceil - 1 \right\}.$$

Optionally, the subcarrier position set may be represented as:

$$S = \left\{ nK_{min} + k \mid n = 0, \cdots, \left\lfloor \frac{N}{2} \right\rfloor \right\} \cup \left\{ \left[ (n+1)\left\lfloor \frac{N}{2} \right\rfloor + n \right] K_{min} + k \mid n = 1, \cdots, \left\lceil \frac{N}{2} \right\rceil - 1 \right\}.$$

Implementation 2.3.2:

In this implementation, an integer from 0 to $\left\lfloor \dfrac{N}{2} \right\rfloor$ is taken for the variable n based on the formula $nK_{min} + K_{offset}$, to obtain the first position set; and an integer from 1 to $\left\lceil \dfrac{N}{2} \right\rceil - 1$ is taken for the variable n based on the formula $\left[ (n+1)\left\lfloor \dfrac{N}{2} \right\rfloor + n \right] K_{min} + K_{offset}$, to obtain the second position set.

In this implementation, the first position set may be represented as:

$$S_1 = \left\{ nK_{min} + K_{offset} \mid n = 0, \cdots, \left\lfloor \frac{N}{2} \right\rfloor \right\}.$$

In this implementation, the second position set may be represented as:

$$S_2 = \left\{ \left[ (n+1)\left\lfloor \frac{N}{2} \right\rfloor + n \right] K_{min} + K_{offset} \mid n = 1, \cdots, \left\lceil \frac{N}{2} \right\rceil - 1 \right\}.$$

Optionally, the subcarrier position set may be represented as:

$$S = \left\{ nK_{min} + K_{offset} \mid n = 0, \cdots, \left\lfloor \frac{N}{2} \right\rfloor \right\} \cup \left\{ \left[ (n+1)\left\lfloor \frac{N}{2} \right\rfloor + n \right] K_{min} + K_{offset} \mid n = 1, \cdots, \left\lceil \frac{N}{2} \right\rceil - 1 \right\}.$$

Implementation 2.3.3:

In this implementation, an integer from 0 to $\left\lfloor \dfrac{N}{2} \right\rfloor$ is taken for the variable n based on the formula $nK_{min} + k + K_{offset}$, to obtain the first position set; and an integer from 1 to $\left\lceil \dfrac{N}{2} \right\rceil - 1$ is taken for the variable n based on the formula $\left[ (n+1)\left\lfloor \dfrac{N}{2} \right\rfloor + n \right] K_{min} + k + K_{offset}$, to obtain the second position set.

In this implementation, the first position set may be represented as:

$$S_1 = \left\{ nK_{min} + k + K_{offset} \mid n = 0, \cdots, \left\lfloor \frac{N}{2} \right\rfloor \right\}.$$

In this implementation, the second position set may be represented as:

$$S_2 = \left\{ \left[ (n+1)\left\lfloor \frac{N}{2} \right\rfloor + n \right] K_{min} + k + K_{offset} \mid n = 1, \cdots, \left\lceil \frac{N}{2} \right\rceil - 1 \right\}.$$

Optionally, the subcarrier position set may be represented as:

$$S = \left\{ nK_{min} + k + K_{offset} \mid n = 0, \cdots, \left\lfloor \frac{N}{2} \right\rfloor \right\} \cup \left\{ \left[ (n+1)\left\lfloor \frac{N}{2} \right\rfloor + n \right] K_{min} + k + K_{offset} \mid n = 1, \cdots, \left\lceil \frac{N}{2} \right\rceil - 1 \right\}.$$

FIG. 2B is a flowchart illustrating a method for sending a sensing reference signal according to an embodiment of the present disclosure. As shown in FIG. 2B, an embodiment of the present disclosure relates to a method for sending a sensing reference signal. In some embodiments, the method for sending a sensing reference signal may be used for a sensing transmitter in a sensing network. The method for sending a sensing reference signal includes the following steps.

**In step S2201,** at least one parameter for determining a subcarrier position is sent to a sensing receiver.

In some embodiments, the parameter for determining the subcarrier position includes:

a minimum frequency domain interval $K_{min}$ of a sensing reference signal resource element;
a first parameter N.

In some embodiments, the parameter for determining the subcarrier position includes:

a minimum frequency domain interval $K_{min}$ of a sensing reference signal resource element;
a first parameter N;
a first offset k.

In some embodiments, the parameter for determining the subcarrier position includes:

a minimum frequency domain interval $K_{min}$ of a sensing reference signal resource element;
a first parameter N;
a second offset $K_{offset}$.

In some embodiments, the parameter for determining the subcarrier position includes:

a minimum frequency domain interval $K_{min}$ of a sensing reference signal resource element;
a first parameter N;
a first offset k;
a second offset $K_{offset}$.

In some embodiments, at least one of the minimum frequency domain interval $K_{min}$ of the sensing reference signal resource element and the first parameter N is sent to the sensing receiver.

In some embodiments, at least one of the minimum frequency domain interval $K_{min}$ of the sensing reference signal resource element, the first parameter N, and the first offset k is sent to the sensing receiver.

In some embodiments, at least one of the minimum frequency domain interval $K_{min}$ of the sensing reference signal resource element, the first parameter N, and the second offset $K_{offset}$ is sent to the sensing receiver.

In some embodiments, at least one of the minimum frequency domain interval $K_{min}$ of the sensing reference signal resource element, the first parameter N, the first offset k, and the second offset $K_{offset}$ is sent to the sensing receiver.

In some embodiments, the sensing transmitter may itself generate all of the parameters for determining the subcarrier positions.

In some embodiments, the sensing transmitter sends at least one parameter for determining the subcarrier position to the sensing receiver through signaling. For example, the sensing transmitter sends at least one of the minimum frequency domain interval $K_{min}$ of the sensing reference signal resource element, the first parameter N, the first offset k, and the second offset $K_{offset}$ to the sensing receiver by using signaling.

In some embodiments, both the sensing transmitter and the sensing receiver in the sensing network are base stations, and the sensing network uses a distributed control mechanism.

In some embodiments, both the sensing transmitter and the sensing receiver are gNBs.

In some embodiments, the above signaling is signaling of an Xn interface or an X2 interface.

In some embodiments, one of the sensing transmitter and the sensing receiver in the sensing network is a base station, and the other is a terminal. For example, the sensing transmitter is a base station, and the sensing receiver is a terminal. For another example, the sensing transmitter is a terminal, and the sensing receiver is a base station.

In some embodiments, the above signaling is Radio Resource Control (RRC) signaling, and the signaling interface is a Uu interface.

In some embodiments, both the sensing transmitter and the sensing receiver in the sensing network are terminals.

In some embodiments, the above signaling is RRC signaling, and the signaling interface is a PC5 interface.

In step S2202, a first position set and a second position set are determined according to the parameter for determining the subcarrier position.

For an optional implementation of step S2202, reference may be made to the optional implementation of step S2101 in FIG. 2A, for example, reference may be made to the optional implementations 1.1, 1.2, 1.3, 2.1, 2.2, 2.3, 2.1.1, 2.1.2, 2.1.3, 2.2.1, 2.2.2, 2.2.3, 2.3.1, 2.3.2, and 2.3.3 of step S2101, and details are not described herein again.

In step S2203: a subcarrier position set is obtained according to the first position set and the second position set.

For an optional implementation of step S2203, reference may be made to the optional implementation of step S2102 in FIG. 2A and other associated part in the embodiment involved in FIG. 2A. For example, reference may be made to related descriptions of the subcarrier position set in the optional implementation 1.1, implementation 1.2, implementation 1.3, implementation 2.1, implementation 2.2, implementation 2.3, implementation 2.1.1, implementation 2.1.2, implementation 2.1.3, implementation 2.2.1, implementation 2.2.2, implementation 2.2.3, implementation 2.3.1, implementation 2.3.2, implementation 2.3.3.

In step S2204, the sensing reference signal is sent according to the subcarrier position indicated by the subcarrier position set.

According to the foregoing technical solution, the sensing transmitter may send, to the sensing receiver, the at least one parameter for determining the subcarrier position, so that the sensing receiver can determine, according to the parameter sent by the sensing transmitter, the subcarrier position for receiving the sensing reference signal.

In some embodiments, the execution sequence of step S2201 is not limited, for example, step S2201 may be executed before or after step S2202, or executed simultaneously with step S2202, step S2201 may be executed before or after step S2203, or executed simultaneously with step S2203, and step S2201 may be executed before or after step S2204, or executed simultaneously with step S2204.

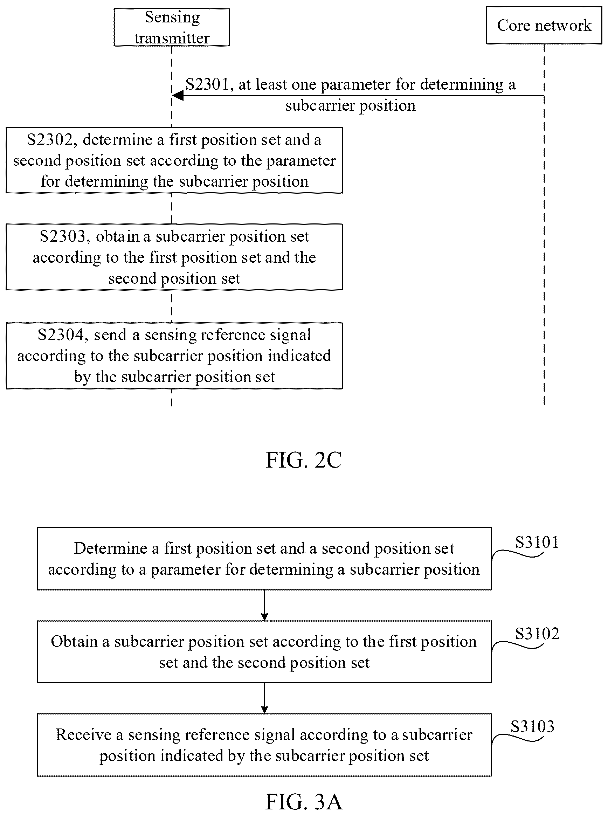

FIG. 2C is a flowchart illustrating a method for sending a sensing reference signal according to an embodiment of the present disclosure. As shown in FIG. 2C, an embodiment of the present disclosure relates to a method for sending a sensing reference signal. In some embodiments, the method for sending a sensing reference signal may be used for a sensing transmitter in a sensing network. The method for sending a sensing reference signal includes the following steps.

**In step S2301,** at least one parameter that is sent by a core network and that is used to determine a subcarrier position is received.

In some embodiments, the parameter for determining the subcarrier position includes:

a minimum frequency domain interval $K_{min}$ of a sensing reference signal resource element;
a first parameter N.

In some embodiments, the parameter for determining the subcarrier position includes:

a minimum frequency domain interval $K_{min}$ of a sensing reference signal resource element;
a first parameter N;
a first offset k.

In some embodiments, the parameter for determining the subcarrier position includes:

a minimum frequency domain interval $K_{min}$ of a sensing reference signal resource element;
a first parameter N;
a second offset $K_{offset}$.

In some embodiments, the parameter for determining the subcarrier position includes:

a minimum frequency domain interval $K_{min}$ of a sensing reference signal resource element;
a first parameter N;
a first offset k;
a second offset $K_{offset}$.

In some embodiments, at least one of the minimum frequency domain interval $K_{min}$ of the sensing reference signal resource element and the first parameter N sent by the core network is received.

In some embodiments, at least one of the minimum frequency domain interval $K_{min}$ of the sensing reference signal resource element, the first parameter N, and the first offset k sent by the core network is received.

In some embodiments, at least one of the minimum frequency domain interval $K_{min}$ of the sensing reference signal resource element, the first parameter N, and the second offset $K_{offset}$ sent by the core network is received.

In some embodiments, at least one of the minimum frequency domain interval $K_{min}$ of the sensing reference signal resource element, the first parameter N, the first offset k, and the second offset $K_{offset}$ sent by the core network is received.

In some embodiments, both the sensing transmitter and the sensing receiver in the sensing network are base stations, and the sensing network uses a centralized control mechanism.

In some embodiments, both the sensing transmitter and the sensing receiver are gNBs.

In some embodiments, the sensing transmitter receives at least one parameter that is sent by a centralized control node in the core network and is used for determining the subcarrier position.

In some embodiments, both the sensing transmitter and the sensing receiver in the sensing network are connected to the centralized control node in the core network, and the centralized control node generates, for each sensing transmitter connected to the centralized control node, at least one parameter for determining a subcarrier position, and sends the generated parameter to the corresponding sensing transmitter. For example, the centralized control node sends at least one of the minimum frequency domain interval $K_{min}$ of the sensing reference signal resource element, the first parameter N, the first offset k, and the second offset $K_{offset}$ to the sensing transmitter by using signaling.

In some embodiments, the interface of the above signaling may be an interface from a centralized control node in the core network to the gNB, for example, a wired connection interface.

According to the foregoing embodiment, in a case that both the sensing transmitter and the sensing receiver in the sensing network are base stations and the sensing network uses the centralized control mechanism, all or some parameters for determining the subcarrier position may be generated by using the centralized control node in the core network, and all or some of the generated parameters are sent to the sensing transmitter in the sensing network.

In some embodiments, the centralized control node in the core network may further send, to the corresponding sensing receiver by using signaling, at least one parameter that is corresponding to the sensing transmitter and that is used to determine the subcarrier position, so that the corresponding sensing receiver can determine the subcarrier position of the sensing reference signal according to the at least one parameter, to receive the sensing reference signal sent by the sensing transmitter.

In some embodiments, the centralized control node in the core network may further send, to all sensing receivers connected to the centralized control node by using signaling, at least one parameter that is corresponding to each sensing transmitter connected to the centralized control node and that is used to determine a subcarrier position, so that each sensing receiver can determine a subcarrier position of a sensing reference signal of each sensing transmitter.

In some embodiments, the sensing network includes a plurality of sensing transmitters, the plurality of sensing transmitters are all base stations, and the sensing receiver in the sensing network is a terminal.

In some embodiments, the plurality of sensing transmitters are all gNBs.

In some embodiments, the sensing transmitter receives at least one parameter that is sent by the core network element and that is used to determine the subcarrier position.

In some embodiments, the core network element generates, for each sensing transmitter in the sensing network, at least one parameter for determining a subcarrier position, and sends the generated parameter to the corresponding sensing transmitter. For example, the core network element sends at least one of the minimum frequency domain interval $K_{min}$ of the sensing reference signal resource element, the first parameter N, the first offset k, and the second offset $K_{offset}$ to the sensing transmitter by using signaling.

According to the foregoing embodiment, for a case in which the sensing network includes a plurality of sensing transmitters, the plurality of sensing transmitters in the sensing network are all base stations, and the sensing receiver in the sensing network is a terminal, all or some parameters used to determine a subcarrier position may be generated by using the core network element, to avoid a conflict caused by the plurality of sensing transmitters generating parameters separately, and all or some of the generated parameters are sent to the sensing transmitter in the sensing network.

In some embodiments, the core network element may be a location management functionality (LMF) network element, or a network element specially used for sensing, for example, a sensing management functionality (SMF) network element.

In some embodiments, the core network element may further send, to the sensing receiver in the sensing network, at least one parameter that corresponds to a plurality of sensing transmitters in the sensing network and that is used to determine a subcarrier position, so that the sensing receiver can know parameters that correspond to all sensing transmitters in the sensing network in which the sensing receiver is located and that are used to determine a subcarrier position.

In **step S2302,** a first position set and a second position set are determined according to the parameter for determining the subcarrier position.

For an optional implementation of step S2302, reference may be made to the optional implementation of step S2101 in FIG. 2A, for example, reference may be made to the optional implementations 1.1, 1.2, 1.3, 2.1, 2.2, 2.3, 2.1.1, 2.1.2, 2.1.3, 2.2.1, 2.2.2, 2.2.3, 2.3.1, 2.3.2, and 2.3.3 of step S2101, and details are not described herein again.

In some embodiments, if the centralized control node in the core network does not send all the parameters for determining the subcarrier position, when the sensing transmitter determines the first position set and the second position set, a default value may be used for the parameter not sent by the centralized control node.

In some embodiments, if the centralized control node in the core network does not send all parameters for determining the subcarrier position this time, but for the parameter(s) that is not sent this time, the centralized control node has sent the value(s) of the parameter(s) before, when the sensing transmitter determines the first position set and the second position set, for the parameter(s) that is not sent this time by the centralized control node, the value(s) of the parameter(s) that is sent by the centralized control node last time may be used.

In some embodiments, if the core network element does not send all parameters for determining the subcarrier position, when the sensing transmitter determines the first position set and the second position set, a default value may be used for the parameter(s) that is not sent by the core network element.

In some embodiments, if the core network element does not send all parameters for determining the subcarrier position this time, but for the parameter(s) that is not sent this time, the core network element has previously sent a value(s) of the parameter(s), when the sensing transmitter determines the first position set and the second position set, the value(s) of the parameter(s) that is previously sent by the core network element may be used for the parameter that is not sent by the core network element.

In **step S2303,** a subcarrier position set is obtained according to the first position set and the second position set.

For an optional implementation of step S2303, reference may be made to the optional implementation of step S2102 in FIG. 2A and other associated part in the embodiment in FIG. 2A. For example, reference may be made to related descriptions of the subcarrier position set in the optional implementation 1.1, implementation 1.2, implementation 1.3, implementation 2.1, implementation 2.2, implementation 2.3, implementation 2.1.1, implementation 2.1.2, implementation 2.1.3, implementation 2.2.1, implementation 2.2.2, implementation 2.2.3, implementation 2.3.1, implementation 2.3.2, implementation 2.3.3.

In **step S2304,** a sensing reference signal is sent according to the subcarrier position indicated by the subcarrier position set.

According to the foregoing technical solution, the sensing transmitter can determine the subcarrier position of the sensing reference signal according to at least one parameter that is sent by the core network and that is used to determine the subcarrier position, and send the sensing reference signal according to the subcarrier position.

FIG. 3A is a flowchart illustrating a method for receiving a sensing reference signal according to an embodiment of the present disclosure. As shown in FIG. 3A, an embodiment of the present disclosure relates to a method for receiving a sensing reference signal. In some embodiments, the method for receiving a sensing reference signal may be applied to a sensing receiver in a sensing network. The method for receiving a sensing reference signal includes the following steps.

In **step S3101,** a first position set and a second position set are determined according to a parameter for determining a subcarrier position.

In some embodiments, the first position set and the second position set are used to indicate the subcarrier position.

In some embodiments, the first position set includes one or more elements, and each element is used to indicate a corresponding subcarrier position. Optionally, each element may be a number.

In some embodiments, the second position set includes one or more elements, and each element is used to indicate a corresponding subcarrier position. Optionally, each element may be a number.

For an optional implementation of step S3101, reference may be made to the optional implementation of step S2101 in FIG. 2A, for example, reference may be made to the optional implementations 1.1, 1.2, 1.3, 2.1, 2.2, 2.3, 2.1.1, 2.1.2, 2.1.3, 2.2.1, 2.2.2, 2.2.3, 2.3.1, 2.3.1, and 2.3.3 of step S2101, and details are not described herein again.

In **step S3102,** a subcarrier position set is obtained according to the first position set and the second position set.

For an optional implementation of step S3102, reference may be made to the optional implementation of step S2102 in FIG. 2A and other associated part in the embodiment in FIG. 2A. For example, reference may be made to related descriptions of the subcarrier position set in the optional implementation 1.1, implementation 1.2, implementation 1.3, implementation 2.1, implementation 2.2, implementation 2.3, implementation 2.1.1, implementation 2.1.2, implementation 2.1.3, implementation 2.2.1, implementation 2.2.2, implementation 2.2.3, implementation 2.3.1, implementation 2.3.2, implementation 2.3.3.

In **step S3103,** a sensing reference signal is received according to a subcarrier position indicated by the subcarrier position set.

According to the foregoing technical solution, the sensing receiver in the sensing network may first determine, according to the parameter for determining the subcarrier position, the first position set and the second position set that are used to indicate the subcarrier position, obtain the final subcarrier position set according to the first position set and the second position set, and then receive the sensing reference signal according to the subcarrier position indicated in the final subcarrier position set, thereby achieving the receipt of the sensing reference signal.

In some embodiments, the last subcarrier position in the first position set may be the same as the first subcarrier position in the second position set.

In some embodiments, all subcarrier positions in the first position set may be different from all subcarrier positions in the second position set.

In some embodiments, subcarrier positions indicated by the first position set are evenly distributed, subcarrier positions indicated by the second position set are evenly distributed, and a subcarrier frequency domain spacing in the first position set is different from a subcarrier frequency domain spacing in the second position set.

In some embodiments, the subcarrier positions indicated by the subcarrier position set are unevenly distributed.

According to the foregoing technical solution, the sensing receiver first determines the first position set and the second position set whose subcarrier positions are evenly distributed, and subcarrier frequency domain spacings of the first position set and the second position set are different, so that a subcarrier position set whose subcarrier positions are unevenly distributed can be obtained, and the sensing receiver receives the sensing reference signal according to the unevenly distributed subcarrier positions. Compared with the conventional uniform comb pattern, the sensing reference signal frequency domain pattern with non-uniform frequency domain provided by the subcarrier position set of the embodiment of the present disclosure can achieve a larger uniform degree of freedom in the Khatri-Rao subspace, and prevent the sensing receiver from observing multiple images of the channel impulse response.

In some embodiments, the subcarrier frequency domain spacing in the first position set is related to a minimum frequency domain spacing $K_{min}$ of the sensing reference signal resource element. $K_{min}$ is a positive integer.

In some embodiments, the subcarrier frequency domain spacing in the second position set is related to the minimum frequency domain spacing $K_{min}$ of the sensing reference signal resource element and the first parameter N. $K_{min}$ is a positive integer, and N is a positive integer greater than 1.

In some embodiments, the parameter for determining the subcarrier position includes:

a minimum frequency domain interval $K_{min}$ of a sensing reference signal resource element, $K_{min}$ being a positive integer;
a first parameter N, N being a positive integer greater than 1.

In some embodiments, the parameter for determining the subcarrier position includes:

a minimum frequency domain interval $K_{min}$ of a sensing reference signal resource element, $K_{min}$ being a positive integer;
a first parameter N, N being a positive integer greater than 1;
an offset (*Offset*), *Offset* is a non-negative integer.

In some embodiments, the offset (*Offset*) may include at least one of the following:

a first offset k, k being a non-negative integer less than $K_{min}$;
a second offset $K_{offset}$, used to indicate an offset of the start PRB of the sensing reference signal relative to the common resource block 0, $K_{offset}$ being a non-negative integer multiple of the quantity of subcarriers included in the PRB. For example, the quantity of subcarriers included in the PRB is 12.

$$k \in \{0, 1, \ldots, K_{min} - 1\}.$$

In some embodiments, for the parameter for determining the subcarrier position, reference may be made to related descriptions in the embodiments related to FIG. 2A, FIG. 2B, and FIG. 2C.

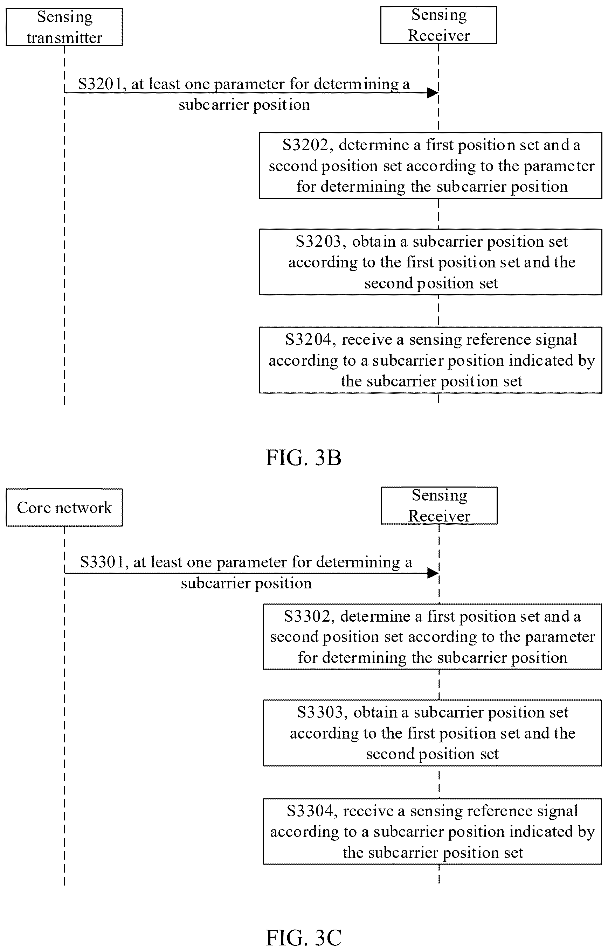

FIG. 3B is a flowchart illustrating a method for receiving a sensing reference signal according to an embodiment of the present disclosure. As shown in FIG. 3B, an embodiment of the present disclosure relates to a method for receiving a sensing reference signal. In some embodiments, the method for receiving a sensing reference signal may be applied to a sensing receiver in a sensing network. The method for receiving a sensing reference signal includes the following steps.

In **step S3201,** at least one parameter that is sent by a sensing transmitter and that is used to determine a subcarrier position is received.

For an optional implementation of step S3201, reference may be made to the optional implementation of step S2201 in FIG. 2B.

In some embodiments, at least one of the minimum frequency domain interval $K_{min}$ of the sensing reference signal resource element and the first parameter N sent by the sensing transmitter is received.

In some embodiments, at least one of the minimum frequency domain interval $K_{min}$ of the sensing reference signal resource element, the first parameter N, and the first offset k sent by the sensing transmitter is received.

In some embodiments, at least one of the minimum frequency domain interval $K_{min}$ of the sensing reference signal resource element, the first parameter N, and the second offset $K_{offset}$ sent by the sensing transmitter is received.

In some embodiments, at least one of the minimum frequency domain interval $K_{min}$ of the sensing reference signal resource element, the first parameter N, the first offset k, and the second offset $K_{offset}$ sent by the sensing transmitter is received.

In **step S3202,** a first position set and a second position set are determined according to the parameter for determining the subcarrier position.

For an optional implementation of step S3202, reference may be made to the optional implementation of step S2101 in FIG. 2A, for example, reference may be made to the optional implementations 1.1, 1.2, 1.3, 2.1, 2.2, 2.3, 2.1.1, 2.1.2, 2.1.3, 2.2.1, 2.2.2, 2.2.3, 2.3.1, 2.3.2, and 2.3.3 of step S2101, and details are not described herein again.

In some embodiments, if the sensing transmitter does not send all the parameters for determining the subcarrier position, when the sensing receiver determines the first position set and the second position set, a default value may be used for the parameter that is not sent by the sensing transmitter.

In some embodiments, if the sensing transmitter does not send all the parameters for determining the subcarrier position this time, but for the parameter(s) that is not sent this time, the sensing transmitter has sent the value(s) of the parameter(s) before, when the sensing receiver determines the first position set and the second position set, the value(s) of the parameter(s) sent by the sensing transmitter last time may be used for the parameter(s) that is not sent this time by the sensing transmitter.

In **step S3203,** a subcarrier position set is obtained according to the first position set and the second position set.

For an optional implementation of step S3203, reference may be made to the optional implementation of step S2102 in FIG. 2A and other associated part in the embodiment in FIG. 2A. For example, reference may be made to related descriptions of the subcarrier position set in the optional implementation 1.1, implementation 1.2, implementation 1.3, implementation 2.1, implementation 2.2, implementation 2.3, implementation 2.1.1, implementation 2.1.2, implementation 2.1.3, implementation 2.2.1, implementation 2.2.2, implementation 2.2.3, implementation 2.3.1, implementation 2.3.2, implementation 2.3.3.

In **step S3204,** a sensing reference signal is received according to a subcarrier position indicated by the subcarrier position set.

According to the foregoing technical solution, the sensing receiver can determine, according to the at least one parameter that is sent by the sensing transmitter and that is used to determine the subcarrier position, the subcarrier position for receiving the sensing reference signal, to receive the sensing reference signal of the sensing transmitter.

FIG. 3C is a flowchart illustrating a method for receiving a sensing reference signal according to an embodiment of the present disclosure. As shown in FIG. 3C, an embodiment of the present disclosure relates to a method for receiving a sensing reference signal. In some embodiments, the method for receiving a sensing reference signal may be applied to a sensing receiver in a sensing network. The method for receiving a sensing reference signal includes the following steps.

In **step S3301,** at least one parameter that is sent by a core network and that is used to determine a subcarrier position is received.

For an optional implementation of step S3301, reference may be made to the optional implementation of step S2301 in FIG. 2C.

In some embodiments, at least one of the minimum frequency domain interval $K_{min}$ of the sensing reference signal resource element and the first parameter N sent by the core network is received.

In some embodiments, at least one of the minimum frequency domain interval $K_{min}$ of the sensing reference signal resource element, the first parameter N, and the first offset k sent by the core network is received.

In some embodiments, at least one of the minimum frequency domain interval $K_{min}$ of the sensing reference signal resource element, the first parameter N, and the second offset $K_{offset}$ sent by the core network is received.

In some embodiments, at least one of the minimum frequency domain interval $K_{min}$ of the sensing reference signal resource element, the first parameter N, the first offset k, and the second offset $K_{offset}$ sent by the core network is received.

In some embodiments, both the sensing transmitter and the sensing receiver in the sensing network are base stations, and the sensing network uses a centralized control mechanism.

In some embodiments, the sensing receiver receives at least one parameter sent by a centralized control node in the core network for determining the subcarrier position.

In some embodiments, the sensing network includes a plurality of sensing transmitters, the plurality of sensing transmitters are all base stations, and a sensing receiver in the sensing network is a terminal.

In some embodiments, the sensing receiver receives at least one parameter that is sent by the core network element and that is used to determine the subcarrier position.

In some embodiments, the core network element may be an LMF network element, or a network element specially used for sensing, for example, an SMF network element.

In some embodiments, the core network element may transparently transmit, to the sensing receiver by using the base station, at least one parameter that corresponds to one or more sensing transmitters and that is used to determine the subcarrier position.

In some embodiments, the core network element may transparently transmit the foregoing parameter to the sensing receiver by using NAS (non-access stratum) signaling.

In **step S3302,** a first position set and a second position set are determined according to the parameter for determining the subcarrier position.

For an optional implementation of step S3302, reference may be made to the optional implementation of step S2101 in FIG. 2A and the optional implementation of step S2302 in FIG. 2C, for example, reference may be made to the optional implementation 1.1, implementation 1.2, implementation 1.3, implementation 2.1, implementation 2.2, implementation 2.3, implementation 2.1.1, implementation 2.1.2, implementation 2.1.3, implementation 2.2.1, implementation 2.2.2, implementation 2.2.3, implementation 2.3.1, implementation 2.3.2, and implementation 2.3.3 of step S2101, and details are not described herein again.

In some embodiments, if the centralized control node in the core network does not send all the parameters for determining the subcarrier position, when the sensing receiver determines the first position set and the second position set, a default value may be used for the parameter(s) not sent by the centralized control node.

In some embodiments, if the centralized control node in the core network does not send all parameters for determining the subcarrier position this time, but for the parameter(s) that is not sent this time, the centralized control node has sent the value(s) of the parameter(s) before, when the sensing receiver determines the first position set and the second position set, the value(s) of the parameter(s) sent by the centralized control node last time may be used for the parameter(s) that is not sent this time by the centralized control node.

In some embodiments, if the core network element does not send all the parameters for determining the subcarrier position, when the sensing receiver determines the first position set and the second position set, a default value may be used for the parameter(s) that is not sent by the core network element.

In some embodiments, if the core network element does not send all parameters for determining the subcarrier position this time, but the core network element has previously sent a value(s) of the parameter(s) for the parameter(s) that is not sent this time, when the sensing receiver determines the first position set and the second position set, the value(s) of the parameter(s) that is previously sent by the core network element may be used for the parameter(s) that is not sent by the core network element.

In **step S3303,** a subcarrier position set is obtained according to the first position set and the second position set.

For an optional implementation of step S3303, reference may be made to the optional implementation of step S2102 in FIG. 2A and other associated part in the embodiment in FIG. 2A. For example, reference may be made to related descriptions of the subcarrier position set in the optional implementation 1.1, implementation 1.2, implementation 1.3, implementation 2.1, implementation 2.2, implementation 2.3, implementation 2.1.1, implementation 2.1.2, implementation 2.1.3, implementation 2.2.1, implementation 2.2.2, implementation 2.2.3, implementation 2.3.1, implementation 2.3.2, and implementation 2.3.3.

In **step S3304,** a sensing reference signal is received according to a subcarrier position indicated by the subcarrier position set.

According to the foregoing technical solution, the sensing receiver can determine, according to the at least one parameter that is sent by the core network and that is used to determine the subcarrier position, the subcarrier position for receiving the sensing reference signal, thereby receiving the sensing reference signal of the sensing transmitter.

An embodiment of the present disclosure further provides an apparatus for implementing the above methods, for example, an apparatus including units or modules for implementing the steps in the above methods for sending a sensing reference signal, for example, the apparatus may be a sensing transmitter. For another example, another apparatus is further provided, including units or modules configured to implement steps in the foregoing method for receiving a sensing reference signals, for example, the foregoing apparatus may be a sensing receiver.

It should be understood that division of the units or modules in the foregoing apparatus is merely logical function division, and in actual implementation, all or some of the units or modules may be integrated into one physical entity, or may be physically separated. In addition, the units or modules in the apparatus may be implemented in a form of software invoked by a processor: for example, the apparatus includes a processor, the processor is connected to a memory, the memory stores instructions, and the processor invokes the instructions stored in the memory, to implement any one of the foregoing methods or implement functions of the units or modules in the foregoing apparatuses, where the processor is, for example, a general-purpose processor such as a central processing unit (CPU) or a microprocessor, and the memory is a memory in the apparatus or a memory outside the apparatus. Alternatively, the units or modules in the apparatus may be implemented in a form of a hardware circuit, functions of some or all of the units or modules may be implemented by designing the hardware circuit, and the hardware circuit may be understood as one or more processors; for example, in an implementation, the hardware circuit is an application-specific integrated circuit (ASIC), and functions of some or all of the units or modules are implemented by designing a logical relationship between components in the circuit; for another example, in another implementation, the hardware circuit may be implemented by using a programmable logic device (PLD), and taking a field programmable gate array (FPGA) as an example, it may include a large quantity of logic gate circuits, and a connection relationship between the logic gate circuits is configured by using a configuration file, to implement functions of some or all of the units or modules. All units or modules of the foregoing apparatus may be implemented in a form of software invoked by a processor, or may be implemented in a form of a hardware circuit, or may be partially implemented in a form of software invoked by a processor, and the remaining part is implemented in a form of a hardware circuit.

In the embodiments of the present disclosure, the processor is a circuit having a signal processing capability. In one implementation, the processor may be a circuit having instruction reading and running capabilities, such as a central processing unit (CPU), a microprocessor, a graphics processing unit (GPU) (which may be understood as a microprocessor), or a digital signal processor (DSP); in another implementation, the processor may implement a certain function through a logical relationship of a hardware circuit, and the logical relationship of the hardware circuit is fixed or reconfigurable, for example, the processor is a hardware circuit implemented by an application-specific integrated circuit (ASIC) or a programmable logic device (PLD), such as an FPGA. In a reconfigurable hardware circuit, a process in which the processor loads a configuration document to implement configuration of the hardware circuit may be understood as a process in which the processor loads instructions to implement functions of some or all of the foregoing units or modules. In addition, it can also be a hardware circuit designed for artificial intelligence, which can be understood as ASIC, such as Neural Network Processing Unit (NPU), Tensor Processing Unit (TPU), Deep learning Processing Unit (DPU), etc.

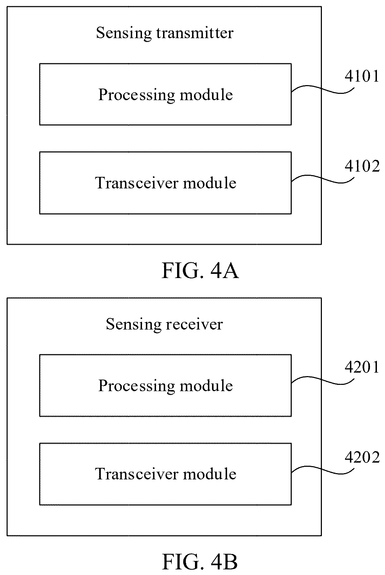

FIG. 4A is a schematic structural diagram of a sensing transmitter in a sensing network according to an embodiment of the present disclosure. As shown in FIG. 4A, the sensing transmitter may include at least one of a processing module 4101 and a transceiver module 4102.

In some embodiments, the processing module 4101 is configured to: determine a first position set and a second position set according to a parameter for determining a subcarrier position, and obtain a subcarrier position set according to the first position set and the second position set, where the first position set and the second position set are used to indicate the subcarrier position.

In some embodiments, the transceiver module 4102 is configured to send a sensing reference signal according to a subcarrier position indicated by the subcarrier position set.

In some embodiments, the parameter for determining the subcarrier position includes:

a minimum frequency domain interval $K_{min}$ of a sensing reference signal resource element, $K_{min}$ being a positive integer;

a first parameter N, N being a positive integer greater than 1.

In some embodiments, the processing module 4101 is configured to:

take an integer from 0 to $\left\lfloor \dfrac{N}{2} \right\rfloor$ for a variable n based on formula $nK_{min}$, to obtain the first position set;

take an integer from 1 to $\left\lceil \dfrac{N}{2} \right\rceil$ for the variable n based on formula $\left( n\left\lfloor \dfrac{N}{2} \right\rfloor + n - 1 \right) K_{min}$, to obtain the second position set;

where $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

In some embodiments, the processing module 4101 is configured to:

take an integer from 0 to $\left\lfloor \dfrac{N}{2} \right\rfloor - 1$ for the variable n based on formula $nK_{min}$, to obtain the first position set;

take an integer from 1 to $\left\lceil \dfrac{N}{2} \right\rceil$ for the variable n based on formula $\left( n\left\lfloor \dfrac{N}{2} \right\rfloor + n - 1 \right) K_{min}$, to obtain the second position set;

where $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

In some embodiments, the processing module 4101 is configured to:

take an integer from 0 to $\left\lfloor \dfrac{N}{2} \right\rfloor$ for the variable n based on formula $nK_{min}$, to obtain the first position set;

take an integer from 1 to $\left\lceil \dfrac{N}{2} \right\rceil - 1$ for the variable n based on formula $\left[ (n+1)\left\lfloor \dfrac{N}{2} \right\rfloor + n \right] K_{min}$, to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the parameter for determining the subcarrier position further includes:
an offset (*Offset*), *Offset* being a non-negative integer.

In some embodiments, the processing module 4101 is configured to:

take an integer from 0 to $\left\lfloor \dfrac{N}{2} \right\rfloor$ for the variable n based on formula $nK_{min}$ + *Offset* , to obtain the first position set;

take an integer from 1 to $\left\lceil \dfrac{N}{2} \right\rceil$ for the variable n based on formula $\left( n\left\lfloor \dfrac{N}{2} \right\rfloor + n - 1 \right) K_{min} + Offset$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the processing module 4101 is configured to:

take an integer from 0 to $\left\lfloor \dfrac{N}{2} \right\rfloor - 1$ for the variable n based on formula $nK_{min}$ + *Offset* , to obtain the first position set;

take an integer from 1 to $\left\lceil \dfrac{N}{2} \right\rceil$ for the variable n based on formula $\left( n\left\lfloor \dfrac{N}{2} \right\rfloor + n - 1 \right) K_{min} + Offset$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the processing module 4101 is configured to:

take an integer from 0 to $\left\lfloor \dfrac{N}{2} \right\rfloor$ for the variable n based on formula $nK_{min}$ + *Offset* , to obtain the first position set;

take an integer from 1 to $\left\lceil \dfrac{N}{2} \right\rceil - 1$ for the variable n based on formula $\left[ (n+1)\left\lfloor \dfrac{N}{2} \right\rfloor + n \right] K_{min} + Offset$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the offset (*Offset*) includes at least one of the following:

a first offset k, k being a non-negative integer less than $K_{min}$;
a second offset $K_{offset}$, used to indicate an offset of the start physical resource block of the sensing reference signal relative to the common resource block 0, $K_{offset}$ being a non-negative integer multiple of the quantity of subcarriers included in the physical resource block.

In some embodiments, a last subcarrier position in the first position set is the same as a first subcarrier position in the second position set; or all subcarrier positions in the first position set are different from all subcarrier positions in the second position set.

In some embodiments, subcarrier positions indicated by the first position set are evenly distributed, subcarrier positions indicated by the second position set are evenly distributed, a subcarrier frequency domain spacing in the first position set is different from a subcarrier frequency domain spacing in the second position set, and subcarrier positions indicated by the subcarrier position set are unevenly distributed.

In some embodiments, the processing module 4101 is configured to take a union set of subcarrier positions in the first position set and the second position set, to obtain the subcarrier position set.

In some embodiments, both the sensing transmitter and the sensing receiver in the sensing network are base stations, and the sensing network uses a distributed control mechanism.

In some embodiments, one of the sensing transmitter and the sensing receiver in the sensing network is a base station, and the other is a terminal.

In some embodiments, both the sensing transmitter and the sensing receiver in the sensing network are terminals.

According to the foregoing embodiment, the transceiver module 4102 is configured to send, to the sensing receiver, at least one parameter for determining the subcarrier position.

In some embodiments, both the sensing transmitter and the sensing receiver in the sensing network are base stations, and the sensing network uses a centralized control mechanism.

In some embodiments, the sensing network includes a plurality of sensing transmitters, the plurality of sensing transmitters are all base stations, and a sensing receiver in the sensing network is a terminal.

According to the foregoing embodiment, the transceiver module 4102 is configured to receive at least one parameter that is sent by the core network and that is used to determine the subcarrier position.

Optionally, the transceiver module 4102 is configured to receive at least one parameter that is sent by a centralized control node in a core network and that is used to determine a subcarrier position.

Optionally, the transceiver module 4102 is configured to receive at least one parameter that is sent by a core network element and that is used to determine a subcarrier position.

Optionally, the processing module 4101 is configured to perform steps in the method for sending a sensing reference signal, for example, at least one of step S2101, step S2102, step S2202, step S2203, step S2302, and step S2303, but is not limited thereto.

Optionally, the transceiver module 4102 is configured to perform communication steps such as sending and/or receiving in the method for sending a sensing reference signal, for example, at least one of step S2103, step S2201, step S2204, step S2301, and step S2304, but is not limited thereto.

In some embodiments, the processing module 4101 may be one module or may include a plurality of submodules. Optionally, the plurality of submodules separately perform all or some steps that need to be performed by the processing module 4101. Optionally, the processing module 4101 may be replaced with the processor.

In some embodiments, the transceiver module 4102 may include a sending module and/or a receiving module, and the sending module and the receiving module may be separate or may be integrated together. Optionally, the transceiver module 4102 and the transceiver may be replaced with each other.

FIG. 4B is a schematic structural diagram of a sensing receiver in a sensing network according to an embodiment of the present disclosure. As shown in FIG. 4B, the sensing receiver may include at least one of a processing module 4201 and a transceiver module 4202.

In some embodiments, the processing module 4201 is configured to: determine a first position set and a second position set according to a parameter for determining a subcarrier position, and obtain a subcarrier position set according to the first position set and the second position set, where the first position set and the second position set are used to indicate the subcarrier position.

In some embodiments, the transceiver module 4202 is configured to receive a sensing reference signal according to the subcarrier position indicated by the subcarrier position set.

In some embodiments, the parameter for determining the subcarrier position includes:

a minimum frequency domain interval $K_{min}$ of a sensing reference signal resource element, $K_{min}$ being a positive integer;

a first parameter N, N being a positive integer greater than 1.

In some embodiments, the processing module 4201 is configured to:

take an integer from 0 to $\left\lfloor \dfrac{N}{2} \right\rfloor$ for the variable n based on formula $nK_{min}$, to obtain the first position set;

take an integer from 1 to $\left\lceil \dfrac{N}{2} \right\rceil$ for the variable n based on formula $\left( n\left\lfloor \dfrac{N}{2} \right\rfloor + n - 1 \right) K_{min}$, to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the processing module 4201 is configured to:

take an integer from 0 to $\left\lfloor \dfrac{N}{2} \right\rfloor - 1$ for the variable n based on formula, to obtain the first position set;

take an integer from 1 to $\left\lceil \dfrac{N}{2} \right\rceil$ for the variable n based on formula $\left( n \left\lfloor \dfrac{N}{2} \right\rfloor + n - 1 \right) K_{min}$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the processing module 4201 is configured to:

take an integer from 0 to $\left\lfloor \dfrac{N}{2} \right\rfloor$ for the variable n based on formula $nK_{min}$, to obtain the first position set;

take an integer from 1 to $\left\lceil \dfrac{N}{2} \right\rceil - 1$ for the variable n based on formula $\left[ (n+1) \left\lfloor \dfrac{N}{2} \right\rfloor + n \right] K_{min}$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the parameter for determining the subcarrier position further includes:
an offset (*Offset*), *Offset* being a non-negative integer.
In some embodiments, the processing module 4201 is configured to:

take an integer from 0 to $\left\lfloor \dfrac{N}{2} \right\rfloor$ for the variable n based on formula $nK_{min} + Offset$ , to obtain the first position set;

take an integer from 1 to $\left\lceil \dfrac{N}{2} \right\rceil$ for the variable n based on formula $\left( n \left\lfloor \dfrac{N}{2} \right\rfloor + n - 1 \right) K_{min} + Offset$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the processing module 4201 is configured to:

take an integer from 0 to $\left\lfloor \dfrac{N}{2} \right\rfloor - 1$ for the variable n based on formula $nK_{min} + Offset$ , to obtain the first position set;

take an integer from 1 to $\left\lceil \dfrac{N}{2} \right\rceil$ for the variable n based on formula $\left( n \left\lfloor \dfrac{N}{2} \right\rfloor + n - 1 \right) K_{min} + Offset$ , to obtain the second position set;

where $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

In some embodiments, the processing module 4201 is configured to:

take an integer from 0 to $\left\lfloor \dfrac{N}{2} \right\rfloor$ for the variable n based on formula $nK_{min} + Offset$, to obtain the first position set;

take an integer from 1 to $\left\lceil \dfrac{N}{2} \right\rceil - 1$ for the variable n based on formula $\left[ (n+1)\left\lfloor \dfrac{N}{2} \right\rfloor + n \right] K_{min} + Offset$, to obtain the second position set;

where $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

In some embodiments, the offset *(Offset)* includes at least one of the following:

a first offset k, k being a non-negative integer less than $K_{min}$;
a second offset $K_{offset}$, used to indicate an offset of the start physical resource block of the sensing reference signal relative to the common resource block 0, $K_{offset}$ being a non-negative integer multiple of the quantity of subcarriers included in the physical resource block.

In some embodiments, a last subcarrier position in the first position set is the same as a first subcarrier position in the second position set; or all subcarrier positions in the first position set are different from all subcarrier positions in the second position set.

In some embodiments, subcarrier positions indicated by the first position set are evenly distributed, subcarrier positions indicated by the second position set are evenly distributed, a subcarrier frequency domain spacing in the first position set is different from a subcarrier frequency domain spacing in the second position set, and subcarrier positions indicated by the subcarrier position set are unevenly distributed.

In some embodiments, the processing module 4201 is configured to take a union set of subcarrier positions in the first position set and the second position set, to obtain the subcarrier position set.

In some embodiments, both the sensing transmitter and the sensing receiver in the sensing network are base stations, and the sensing network uses a distributed control mechanism.

In some embodiments, one of the sensing transmitter and the sensing receiver in the sensing network is a base station, and the other is a terminal.

In some embodiments, both the sensing transmitter and the sensing receiver in the sensing network are terminals.

According to the foregoing embodiment, the transceiver module 4202 is configured to receive at least one parameter that is sent by the sensing transmitter and that is used to determine the subcarrier position.

In some embodiments, both the sensing transmitter and the sensing receiver in the sensing network are base stations, and the sensing network uses a centralized control mechanism.

In some embodiments, the sensing network includes a plurality of sensing transmitters, the plurality of sensing transmitters are all base stations, and a sensing receiver in the sensing network is a terminal.

According to the foregoing embodiment, the transceiver module 4202 is configured to receive at least one parameter that is sent by the core network and that is used to determine the subcarrier position.

Optionally, the transceiver module 4202 is configured to receive at least one parameter that is sent by a centralized control node in a core network and that is used to determine a subcarrier position.

Optionally, the transceiver module 4202 is configured to receive at least one parameter that is sent by a core network element and that is used to determine a subcarrier position.

Optionally, the processing module 4201 is configured to perform steps in the method for receiving a sensing reference signal, for example, at least one of step S3101, step S3102, step S3202, step S3203, step S3302, and step S3303, but is not limited thereto.

Optionally, the transceiver module 4202 is configured to perform communication steps such as sending and/or receiving in the method for receiving a sensing reference signal, for example, at least one of step S3103, step S3201, step S3204, step S3301, and step S3304, but is not limited thereto.

In some embodiments, the processing module 4201 may be one module or may include a plurality of submodules. Optionally, the plurality of submodules separately perform all or some steps that need to be performed by the processing module 4201. Optionally, the processing module 4201 may be replaced with the processor.

In some embodiments, the transceiver module 4202 may include a sending module and/or a receiving module, and the sending module and the receiving module may be separate or may be integrated together. Optionally, the transceiver module 4202 and the transceiver may be replaced with each other.

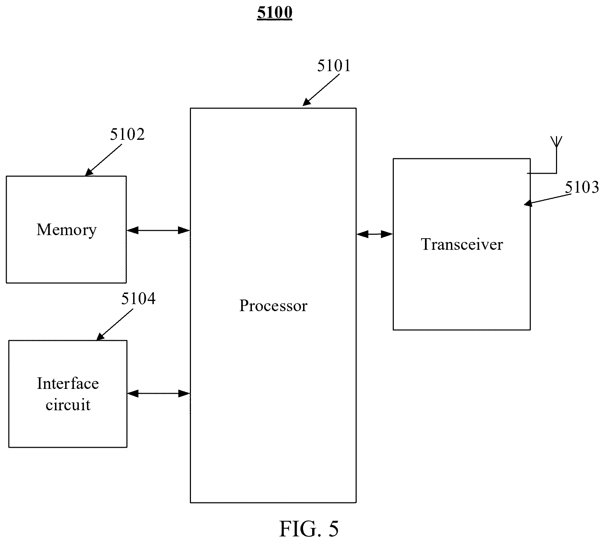

FIG. 5 is a schematic structural diagram of an electronic device according to an embodiment of the present disclosure. The electronic device 5100 may be a sensing transmitter for sending a sensing reference signal, or a sensing receiver for receiving a sensing reference signal. Specifically, the electronic device 5100 may be a network device (e.g., a base station), or a terminal. The electronic device 5100 may be used to realize the method for sending a sensing reference signal or the method for receiving a sensing reference signal described in the above-mentioned method embodiments, for details, reference may be made to the description in the above-mentioned method embodiments.

As shown in FIG. 5, the electronic device 5100 includes one or more processors 5101. The processor 5101 may be a general-purpose processor, a dedicated processor, or the like, for example, may be a baseband processor or a central processing unit. The electronic device 5100 is configured to perform any one of the foregoing method for sending a sensing reference signal and method for receiving a sensing reference signal.

In some embodiments, the electronic device 5100 further includes one or more memories 5102 configured to store instructions. Optionally, all or a part of the memory 5102 may alternatively be located outside the electronic device 5100.

In some embodiments, the electronic device 5100 further includes one or more transceivers 5103. When the electronic device 5100 includes one or more transceivers 5103, the transceiver 5103 performs at least one of communication steps (for example, step S2103, step S2201, step S2204, step S2301, step S2304, step S3103, step S3201, step S3204, step S3301, and step S3304, but not limited thereto) in the foregoing methods, and the processor 5101 performs at least one of other steps (for example, step S2101, step S2102, step S2202, step S2203, step S2302, step S2303, step S3101, step S3102, step S3202, step S3203, step S3302, and step S3303).

In some embodiments, the transceiver may include a receiver and/or a transmitter, and the receiver and the transmitter may be separate or may be integrated together. Optionally, terms such as a transceiver, a transceiver unit, a transceiver machine, and a transceiver circuit may be replaced with each other, terms such as a transmitter, a sending unit, a transmitter machine, and a sending circuit may be replaced with each other, and terms such as a receiver, a receiving unit, a receiver machine, and a receiving circuit may be replaced with each other.

In some embodiments, the electronic device 5100 may include one or more interface circuits 5104. Optionally, the interface circuit 5104 is connected to the memory 5102, and the interface circuit 5104 may be configured to receive a signal from the memory 5102 or another apparatus, and may be configured to send a signal to the memory 5102 or another apparatus. For example, the interface circuit 5104 may read instructions stored in the memory 5102, and send the instructions to the processor 5101.

The electronic device 5100 described in the above embodiments may be a network device (e.g., a base station) or a terminal, but the scope of the electronic device 5100 described in the present disclosure is not limited thereto, and the structure of the electronic device 5100 may not be limited by FIG. 5. The electronic device may be a stand-alone device or may be part of a large device. For example, the electronic device may be: (1) an independent integrated circuit (IC), or a chip, or a chip system or subsystem; (2) a set having one or more ICs, where optionally, the IC set may also include a storage component configured to store data and a program; (3) an ASIC, for example, a modem; (4) a module that may be embedded in another device; (5) a receiver, a terminal device, a smart terminal device, a cellular phone, a wireless device, a handset, a mobile unit, a vehicle-mounted device, a network device, a cloud device, an artificial intelligence device, or the like; and (6) others.

The present disclosure further provides a storage medium, where the storage medium stores instructions, and when the instructions are run on the electronic device 5100, the electronic device 5100 is enabled to perform any one of the foregoing method for sending a sensing reference signal and method for receiving a sensing reference signal. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product that, when executed by an electronic device, causes the electronic device to perform any one of the above method for sending a sensing reference signal and method for receiving a sensing reference signal. Optionally, the program product is a computer program product.

The present disclosure further provides a computer program that, when run on a computer, causes the computer to perform any one of the above method for sending a sensing reference signal and method for receiving a sensing reference signal.

## Claims

1. A method for sending a sensing reference signal, performed by a sensing transmitter in a sensing network, wherein the method comprises:

   determining a first position set and a second position set according to a parameter for determining a subcarrier position, wherein the first position set and the second position set are used to indicate the subcarrier position;

obtaining a subcarrier position set according to the first position set and the second position set; and
sending a sensing reference signal according to a subcarrier position indicated by the subcarrier position set;
wherein the parameter for determining the subcarrier position comprises:

a minimum frequency domain interval $K_{min}$ of a sensing reference signal resource element, wherein $K_{min}$ is a positive integer; and
a first parameter N, wherein N is a positive integer greater than 1.

2. The method according to claim 1, wherein determining the first position set and the second position set according to the parameter for determining the subcarrier position comprises:

taking an integer from 0 to $\left\lfloor \dfrac{N}{2} \right\rfloor$ for a variable n based on a formula $nK_{min}$, to obtain the first position set; and

taking an integer from 1 to $\left\lceil \dfrac{N}{2} \right\rceil$ for the variable n based on a formula $\left( n\left\lfloor \dfrac{N}{2} \right\rfloor + n - 1 \right) K_{min}$, to obtain the second position set;

wherein $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

3. The method according to claim 1, wherein determining the first position set and the second position set according to the parameter for determining the subcarrier position comprises:

taking an integer from 0 to $\left\lfloor \dfrac{N}{2} \right\rfloor - 1$ for a variable n based on a formula $nK_{min}$, to obtain the first position set; and

taking an integer from 1 to $\left\lceil \dfrac{N}{2} \right\rceil$ for the variable n based on a formula $\left( n\left\lfloor \dfrac{N}{2} \right\rfloor + n - 1 \right) K_{min}$, to obtain the second position set;

wherein $\left\lfloor \dfrac{N}{2} \right\rfloor$ represents rounding down 2 , and $\left\lceil \dfrac{N}{2} \right\rceil$ represents rounding up $\dfrac{N}{2}$.

4. The method according to claim 1, wherein determining the first position set and the second position set according to the parameter for determining the subcarrier position comprises:

taking an integer from 0 to $\left\lfloor \dfrac{N}{2} \right\rfloor$ for a variable n based on a formula $nK_{min}$, to obtain the first position set; and

taking an integer from 1 to $\left\lceil \dfrac{N}{2} \right\rceil - 1$ for the variable n based on a formula $\left[ (n+1)\left\lfloor \dfrac{N}{2} \right\rfloor + n \right] K_{min}$, to obtain the second position set;

wherein $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

5. The method according to claim 1, wherein the parameter for determining the subcarrier position further comprises: an Offset, wherein the Offset is a non-negative integer.

6. The method according to claim 5, wherein determining the first position set and the second position set according to the parameter for determining the subcarrier position comprises:

taking an integer from 0 to $\left\lfloor \dfrac{N}{2} \right\rfloor$ for a variable n based on a formula $nK_{min} + Offset$, to obtain the first position set; and

taking an integer from 1 to $\left\lceil \dfrac{N}{2} \right\rceil$ for the variable n based on a formula $\left( n\left\lfloor \dfrac{N}{2} \right\rfloor + n - 1 \right) K_{min} + Offset$ , to obtain the second position set;

wherein $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

7.  The method according to claim 5, wherein determining the first position set and the second position set according to the parameter for determining the subcarrier position comprises:

taking an integer from 0 to $\left\lfloor \dfrac{N}{2} \right\rfloor - 1$ for a variable n based on a formula $nK_{min} + Offset$ , to obtain the first position set; and

taking an integer from 1 to $\left\lceil \dfrac{N}{2} \right\rceil$ for the variable n based on a formula $\left( n\left\lfloor \dfrac{N}{2} \right\rfloor + n - 1 \right) K_{min} + Offset$ , to obtain the second position set;

wherein $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

8.  The method according to claim 5, wherein determining the first position set and the second position set according to the parameter for determining the subcarrier position comprises:

taking an integer from 0 to $\left\lfloor \dfrac{N}{2} \right\rfloor$ for a variable n based on a formula $nK_{min} + Offset$ , to obtain the first position set; and

taking an integer from 1 to $\left\lceil \dfrac{N}{2} \right\rceil - 1$ for the variable n based on a formula $\left[ (n+1)\left\lfloor \dfrac{N}{2} \right\rfloor + n \right] K_{min} + Offset$ , to obtain the second position set;

wherein $\left\lfloor \dfrac{N}{2} \right\rfloor$ represents rounding down 2 , and $\left\lceil \dfrac{N}{2} \right\rceil$ represents rounding up $\dfrac{N}{2}$ .

9.  The method according to any one of claims 5 to 8, wherein the Offset comprises at least one of:

a first offset k, k being a non-negative integer less than $K_{min}$; and
a second offset $K_{offset}$ used to indicate an offset of a start physical resource block of the sensing reference signal relative to a common resource block 0, $K_{offset}$ being a non-negative integer multiple of a quantity of subcarriers comprised in a physical resource block.

10. The method according to claim 1, wherein a last subcarrier position in the first position set is the same as a first subcarrier position in the second position set; or
all subcarrier positions in the first position set are different from all subcarrier positions in the second position set.

11. The method according to claim 1, wherein subcarrier positions indicated by the first position set are evenly distributed, subcarrier positions indicated by the second position set are evenly distributed, a subcarrier frequency domain spacing in the first position set is different from a subcarrier frequency domain spacing in the second position set, and subcarrier positions indicated by the subcarrier position set are unevenly distributed.

12. The method according to any one of claims 1 to 11, wherein obtaining the subcarrier position set according to the first position set and the second position set comprises:
taking a union of subcarrier positions in the first position set and the second position set to obtain the subcarrier position set.

13. The method according to any one of claims 1 to 12, wherein both the sensing transmitter and a sensing receiver in the sensing network are base stations, and the sensing network adopts a distributed control mechanism; and the method further comprises:
sending at least one parameter for determining a subcarrier position to the sensing receiver.

14. The method according to any one of claims 1 to 12, wherein both the sensing transmitter and a sensing receiver in the sensing network are base stations, and the sensing network adopts a centralized control mechanism; and the method further comprises:
receiving at least one parameter for determining a subcarrier position sent by a core network.

15. The method according to any one of claims 1 to 12, wherein one of the sensing transmitter and a sensing receiver in the sensing network is a base station, and the other is a terminal; and the method further comprises:
sending at least one parameter for determining a subcarrier position to the sensing receiver.

16. The method according to any one of claims 1 to 12, wherein the sensing network comprises a plurality of sensing transmitters, the plurality of sensing transmitters are all base stations, and a sensing receiver in the sensing network is a terminal; and the method further comprises:
receiving at least one parameter for determining a subcarrier position sent by a core network.

17. The method according to any one of claims 1 to 12, wherein both the sensing transmitter and a sensing receiver in the sensing network are terminals; and the method further comprises:
sending at least one parameter for determining a subcarrier position to the sensing receiver.

18. A method for receiving a sensing reference signal, performed by a sensing receiver in a sensing network, wherein the method comprises:

> determining a first position set and a second position set according to a parameter for determining a subcarrier position, wherein the first position set and the second position set are used to indicate the subcarrier position;
> obtaining a subcarrier position set according to the first position set and the second position set; and
> receiving a sensing reference signal according to a subcarrier position indicated by the subcarrier position set;
> wherein the parameter for determining the subcarrier position comprises:

>> a minimum frequency domain interval $K_{min}$ of a sensing reference signal resource element, wherein $K_{min}$ is a positive integer; and
>> a first parameter N, wherein N is a positive integer greater than 1.

19. The method according to claim 18, wherein determining the first position set and the second position set according to the parameter for determining the subcarrier position comprises:

> taking an integer from 0 to $\left\lfloor \dfrac{N}{2} \right\rfloor$ for a variable n based on a formula $nK_{min}$, to obtain the first position set; and

> taking an integer from 1 to $\left\lceil \dfrac{N}{2} \right\rceil$ for the variable n based on a formula $\left( n\left\lfloor \dfrac{N}{2} \right\rfloor + n - 1 \right) K_{min}$, to obtain the second position set;

> wherein $\left\lfloor \dfrac{N}{2} \right\rfloor$ represents rounding down $\dfrac{N}{2}$, and $\left\lceil \dfrac{N}{2} \right\rceil$ represents rounding up $\dfrac{N}{2}$.

20. The method according to claim 18, wherein determining the first position set and the second position set according to the parameter for determining the subcarrier position comprises:

> taking an integer from 0 to $\left\lfloor \dfrac{N}{2} \right\rfloor - 1$ for a variable n based on a formula $nK_{min}$, to obtain the first position set; and

> taking an integer from 1 to $\left\lceil \dfrac{N}{2} \right\rceil$ for the variable n based on a formula $\left( n\left\lfloor \dfrac{N}{2} \right\rfloor + n - 1 \right) K_{min}$, to obtain the second position set;

wherein $\left\lfloor \dfrac{N}{2} \right\rfloor$ represents rounding down 2 , and $\left\lceil \dfrac{N}{2} \right\rceil$ represents rounding up $\dfrac{N}{2}$ .

21. The method according to claim 18, wherein determining the first position set and the second position set according to the parameter for determining the subcarrier position comprises:

taking an integer from 0 to $\left\lfloor \dfrac{N}{2} \right\rfloor$ for a variable n based on a formula $nK_{min}$, to obtain the first position set; and

taking an integer from 1 to $\left\lceil \dfrac{N}{2} \right\rceil - 1$ for the variable n based on a formula $\left[ (n+1) \left\lfloor \dfrac{N}{2} \right\rfloor + n \right] K_{min}$ , to obtain the second position set;

wherein $\left\lfloor \dfrac{N}{2} \right\rfloor$ represents rounding down 2 , and $\left\lceil \dfrac{N}{2} \right\rceil$ represents rounding up $\dfrac{N}{2}$ .

22. The method according to claim 18, wherein the parameter for determining the subcarrier position further comprises: an Offset, wherein the Offset is a non-negative integer.

23. The method according to claim 22, wherein determining the first position set and the second position set according to the parameter for determining the subcarrier position comprises:

taking an integer from 0 to $\left\lfloor \dfrac{N}{2} \right\rfloor$ for a variable n based on a formula $nk_{min} + Offset$, to obtain the first position set; and

taking an integer from 1 to $\left\lceil \dfrac{N}{2} \right\rceil$ for the variable n based on a formula $\left( n \left\lfloor \dfrac{N}{2} \right\rfloor + n - 1 \right) K_{min} + Offset$ , to obtain the second position set;

wherein $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

24. The method according to claim 22, wherein determining the first position set and the second position set according to the parameter for determining the subcarrier position comprises:

taking an integer from 0 to $\left\lfloor \dfrac{N}{2} \right\rfloor - 1$ for a variable n based on a formula $nK_{min} + Offset$, to obtain the first position set; and

taking an integer from 1 to $\left\lceil \dfrac{N}{2} \right\rceil$ for the variable n based on a formula $\left( n \left\lfloor \dfrac{N}{2} \right\rfloor + n - 1 \right) K_{min} + Offset$ , to obtain the second position set;

wherein $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

25. The method according to claim 22, wherein determining the first position set and the second position set according to the parameter for determining the subcarrier position comprises:

taking an integer from 0 to $\left\lfloor \dfrac{N}{2} \right\rfloor$ for a variable n based on a formula $nK_{min} + Offset$, to obtain the first position set; and

taking an integer from 1 to $\left\lceil \dfrac{N}{2} \right\rceil - 1$ for the variable n based on a formula $\left[ (n+1) \left\lfloor \dfrac{N}{2} \right\rfloor + n \right] K_{min} + Offset$ , to obtain the second position set;

wherein $\left\lfloor \dfrac{N}{2} \right\rfloor$ represents rounding down $\dfrac{N}{2}$ , and $\left\lceil \dfrac{N}{2} \right\rceil$ represents rounding up $\dfrac{N}{2}$ .

26. The method according to any one of claims 22 to 25, wherein the Offset comprises at least one of:

a first offset k, k being a non-negative integer less than $K_{min}$; and
a second offset $K_{offset}$ used to indicate an offset of a start physical resource block of the sensing reference signal relative to a common resource block 0, $K_{offset}$ being a non-negative integer multiple of a quantity of subcarriers comprised in a physical resource block.

27. The method according to claim 18, wherein a last subcarrier position in the first position set is the same as a first subcarrier position in the second position set; or
all subcarrier positions in the first position set are different from all subcarrier positions in the second position set.

28. The method according to claim 18, wherein subcarrier positions indicated by the first position set are evenly distributed, subcarrier positions indicated by the second position set are evenly distributed, a subcarrier frequency domain spacing in the first position set is different from a subcarrier frequency domain spacing in the second position set, and subcarrier positions indicated by the subcarrier position set are unevenly distributed.

29. The method according to any one of claims 18 to 28, wherein obtaining the subcarrier position set according to the first position set and the second position set comprises:
taking a union of subcarrier positions in the first position set and the second position set to obtain the subcarrier position set.

30. The method according to any one of claims 18 to 29, wherein both the sensing transmitter and a sensing receiver in the sensing network are base stations, and the sensing network adopts a distributed control mechanism; and the method further comprises:
receiving at least one parameter for determining a subcarrier position sent by the sensing transmitter.

31. The method according to any one of claims 18 to 29, wherein both the sensing transmitter and a sensing receiver in the sensing network are base stations, and the sensing network adopts a centralized control mechanism; and the method further comprises:
receiving at least one parameter for determining a subcarrier position sent by a core network.

32. The method according to any one of claims 18 to 29, wherein one of the sensing transmitter and a sensing receiver in the sensing network is a base station, and the other is a terminal; and the method further comprises:
receiving at least one parameter for determining a subcarrier position sent by the sensing transmitter.

33. The method according to any one of claims 18 to 29, wherein the sensing network comprises a plurality of sensing transmitters, the plurality of sensing transmitters are all base stations, and a sensing receiver in the sensing network is a terminal; and the method further comprises:
receiving at least one parameter for determining a subcarrier position sent by a core network.

34. The method according to any one of claims 18 to 29, wherein both the sensing transmitter and a sensing receiver in the sensing network are terminals; and the method further comprises:
receiving at least one parameter for determining a subcarrier position sent by the sensing transmitter.

35. A sensing transmitter, comprising:

a processing module, configured to determine a first position set and a second position set according to a parameter for determining a subcarrier position, and obtain a subcarrier position set according to the first position set and the second position set, wherein the first position set and the second position set are used to indicate the subcarrier position; and

a transceiver module, configured to send a sensing reference signal according to a subcarrier position indicated by the subcarrier position set;

wherein the parameter for determining the subcarrier position comprises:

a minimum frequency domain interval $K_{min}$ of a sensing reference signal resource element, wherein $K_{min}$ of is a positive integer; and

a first parameter N, wherein N is a positive integer greater than 1.

36. A sensing receiver, comprising:

a processing module, configured to determine a first position set and a second position set according to a parameter for determining a subcarrier position, and obtain a subcarrier position set according to the first position set and the second position set, wherein the first position set and the second position set are used to indicate the subcarrier position; and

a receiver module, configured to receive a sensing reference signal according to a subcarrier position indicated by the subcarrier position set;

wherein the parameter for determining the subcarrier position comprises:

a minimum frequency domain interval $K_{min}$ of a sensing reference signal resource element, wherein $K_{min}$ is a positive integer; and

a first parameter N, wherein N is a positive integer greater than 1.

37. An electronic device, comprising:

one or more processors;

wherein the electronic device is configured to perform the method for sending a sensing reference signal according to any one of claims 1 to 17.

38. An electronic device, comprising:

one or more processors;

wherein the electronic device is configured to perform the method for receiving a sensing reference signal according to any one of claims 18 to 34.

39. A sensing network, comprising:

a sensing transmitter, configured to perform the method for sending a sensing reference signal according to any one of claims 1 to 17; and

a sensing receiver, configured to perform the method for receiving a sensing reference signal according to any one of claims 18 to 34.

40. A storage medium, wherein the storage medium stores instructions, and when the instructions are run on an electronic device, the electronic device is enabled to perform the method for sending a sensing reference signal according to any one of claims 1 to 17, or perform the method for receiving a sensing reference signal according to any one of claims 18 to 34.

Sensing network

Sensing
transmitter
— 1101

Sensing
Receiver
— 1102

FIG. 1

Determine a first position set and a second position set on the
basis of parameters for determining a subcarrier position
S2101

Obtain a subcarrier position set on the basis of the first
position set and the second position set
S2102

Send a sensing reference signal on the basis of the subcarrier
position indicated by the subcarrier position set
S2103

FIG. 2A

Sensing
transmitter

Sensing
Receiver

S2201, at least one parameter for determining a
subcarrier position

S2202, determine a first position set
and a second position set according to
the parameter for determining the
subcarrier position

S2203, obtain a subcarrier position set
according to the first position set and
the second position set

S2204, send a sensing reference signal
according to the subcarrier position
indicated by the subcarrier position set

FIG. 2B

```
┌─────────────┐                                    ┌──────────────┐
│   Sensing   │                                    │ Core network │
│ transmitter │                                    └──────────────┘
└─────────────┘
       │         S2301, at least one parameter for determining a
       │◄────────────────────────────────────────────────────────
       │                    subcarrier position
┌──────────────────────────────────────────┐
│ S2302, determine a first position set and a│
│ second position set according to the parameter│
│ for determining the subcarrier position    │
└──────────────────────────────────────────┘
       │
┌──────────────────────────────────────────┐
│ S2303, obtain a subcarrier position set    │
│ according to the first position set and the│
│         second position set                │
└──────────────────────────────────────────┘
       │
┌──────────────────────────────────────────┐
│ S2304, send a sensing reference signal     │
│ according to the subcarrier position indicated│
│      by the subcarrier position set        │
└──────────────────────────────────────────┘
       │
```

FIG. 2C

```
┌──────────────────────────────────────────────────────┐
│ Determine a first position set and a second position set│  S3101
│ according to a parameter for determining a subcarrier position│
└──────────────────────────────────────────────────────┘
                          │
                          ▼
┌──────────────────────────────────────────────────────┐
│ Obtain a subcarrier position set according to the first position│  S3102
│           set and the second position set              │
└──────────────────────────────────────────────────────┘
                          │
                          ▼
┌──────────────────────────────────────────────────────┐
│ Receive a sensing reference signal according to a subcarrier│  S3103
│    position indicated by the subcarrier position set   │
└──────────────────────────────────────────────────────┘
```

FIG. 3A

| Sensing transmitter | | Sensing Receiver |
|---|---|---|

S3201, at least one parameter for determining a subcarrier position

S3202, determine a first position set and a second position set according to the parameter for determining the subcarrier position

S3203, obtain a subcarrier position set according to the first position set and the second position set

S3204, receive a sensing reference signal according to a subcarrier position indicated by the subcarrier position set

FIG. 3B

| Core network | | Sensing Receiver |
|---|---|---|

S3301, at least one parameter for determining a subcarrier position

S3302, determine a first position set and a second position set according to the parameter for determining the subcarrier position

S3303, obtain a subcarrier position set according to the first position set and the second position set

S3304, receive a sensing reference signal according to a subcarrier position indicated by the subcarrier position set

FIG. 3C

Sensing transmitter

Processing module — 4101

Transceiver module — 4102

FIG. 4A

Sensing receiver

Processing module — 4201

Transceiver module — 4202

FIG. 4B

**5100**

5101

5102

Memory

5104

Interface
circuit

Processor

5103

Transceiver

FIG. 5

## INTERNATIONAL SEARCH REPORT

| International application No. |
| --- |
| **PCT/CN2023/101956** |

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

3GPP, CNTXT, ENTXTC, VEN, WPABSC, CJFD: 参考信号, 感知参考信号, 集合, 位置, 子载波, carrier, RS, sub, set?, reference signal

**C. DOCUMENTS CONSIDERED TO BE RELEVANT**

| Category* | Citation of document, with indication, where appropriate, of the relevant passages | Relevant to claim No. |
| --- | --- | --- |
| A | WO 2018059240 A1 (ZTE CORP.) 05 April 2018 (2018-04-05)<br>entire document | 1-40 |
| A | WO 2022021167 A1 (GUANGDONG OPPO MOBILE TELECOMMUNICATIONS CO., LTD.) 03 February 2022 (2022-02-03)<br>entire document | 1-40 |
| A | US 2022030540 A1 (ZAINAR INC.) 27 January 2022 (2022-01-27)<br>entire document | 1-40 |
| A | US 2022407760 A1 (QUALCOMM INC.) 22 December 2022 (2022-12-22)<br>entire document | 1-40 |
| A | CN 107888352 A (HUAWEI TECHNOLOGIES CO., LTD.) 06 April 2018 (2018-04-06)<br>entire document | 1-40 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 March 2024** | **11 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/101956**

| Patent document cited in search report | | | Publication date (day/month/year) | Patent family member(s) | | | Publication date (day/month/year) |
|---|---|---|---|---|---|---|---|
| WO | 2018059240 | A1 | 05 April 2018 | None | | | |
| WO | 2022021167 | A1 | 03 February 2022 | None | | | |
| US | 2022030540 | A1 | 27 January 2022 | US | 11425536 | B2 | 23 August 2022 |
| | | | | US | 2022369072 | A1 | 17 November 2022 |
| | | | | US | 11722851 | B2 | 08 August 2023 |
| | | | | EP | 4182904 | A1 | 24 May 2023 |
| | | | | EP | 4182904 | A4 | 17 January 2024 |
| | | | | US | 2022030391 | A1 | 27 January 2022 |
| | | | | US | 11445333 | B2 | 13 September 2022 |
| | | | | WO | 2022016161 | A1 | 20 January 2022 |
| | | | | US | 2023413013 | A1 | 21 December 2023 |
| | | | | US | 2023014896 | A1 | 19 January 2023 |
| | | | | JP | 2023535372 | A | 17 August 2023 |
| US | 2022407760 | A1 | 22 December 2022 | WO | 2022272219 | A1 | 29 December 2022 |
| CN | 107888352 | A | 06 April 2018 | US | 2019229971 | A1 | 25 July 2019 |
| | | | | WO | 2018059550 | A1 | 05 April 2018 |
| | | | | EP | 3512144 | A1 | 17 July 2019 |
| | | | | EP | 3512144 | A4 | 11 September 2019 |

Form PCT/ISA/210 (patent family annex) (July 2022)